(19) Europäisches Patentamt / European Patent Office / Office européen des brevets

(11) **EP 3 295 236 B1**

(12) **EUROPÄISCHE PATENTSCHRIFT**

(45) Veröffentlichungstag und Bekanntmachung des Hinweises auf die Patenterteilung:
**01.01.2020 Patentblatt 2020/01**

(21) Anmeldenummer: **16735809.2**

(22) Anmeldetag: **09.05.2016**

(51) Int Cl.:
*G02B 21/00* (2006.01)     *G01N 21/64* (2006.01)

(86) Internationale Anmeldenummer:
**PCT/DE2016/100207**

(87) Internationale Veröffentlichungsnummer:
**WO 2016/180403 (17.11.2016 Gazette 2016/46)**

(54) **AUSWERTUNG VON SIGNALEN DER FLUORESZENZRASTERMIKROSKOPIE UNTER VERWENDUNG EINES KONFOKALEN LASERSCANNING-MIKROSKOPS**

EVALUATION OF SIGNALS OF FLUORESCENCE SCANNING MICROSCOPY USING A CONFOCAL LASER SCANNING MICROSCOPE

ÉVALUATION DE SIGNAUX DE MICROSCOPIE DE FLUORESCENCE À BALAYAGE AU MOYEN D'UN MICROSCOPE CONFOCAL À BALAYAGE LASER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.05.2015 DE 102015107367**

(43) Veröffentlichungstag der Anmeldung:
**21.03.2018 Patentblatt 2018/12**

(73) Patentinhaber:
• **Carl Zeiss Microscopy GmbH**
**07745 Jena (DE)**
• **Carl Zeiss AG**
**73447 Oberkochen (DE)**

(72) Erfinder:
• **NOVIKAU, Yauheni**
**07743 Jena (DE)**
• **KALKBRENNER, Thomas**
**07745 Jena (DE)**
• **ANHUT, Tiemo**
**07749 Jena (DE)**
• **SCHWEDT, Daniel**
**99423 Weimar (DE)**
• **WALD, Matthias**
**07751 Jena (DE)**

(74) Vertreter: **Freitag, Joachim et al**
**Patentanwälte**
**Oehmke & Kollegen**
**Neugasse 13**
**07743 Jena (DE)**

(56) Entgegenhaltungen:
**EP-A1- 2 535 755     DE-A1- 10 356 416**
**US-A1- 2013 176 622**

• **BLANCHARD P M ET AL: "SIMULTANEOUS MULTIPLANE IMAGING WITH A DISTORTED DIFFRACTION GRATING", APPLIED OPTICS, OPTICAL SOCIETY OF AMERICA, WASHINGTON, DC; US, Bd. 38, Nr. 32, 10. November 1999 (1999-11-10), Seiten 6692-6699, XP000893705, ISSN: 0003-6935, DOI: 10.1364/AO.38.006692**
• **MAKOWSKI MICHAL ET AL: "3D imaging with the light sword optical element and deconvolution of distance-dependent point spread functions", 17TH SLOVAK-CZECH-POLISH OPTICAL CONFERENCE ON WAVE AND QUANTUM ASPECTS OF CONTEMPORARY OPTICS, SPIE, 1000 20TH ST. BELLINGHAM WA 98225-6705 USA, Bd. 7746, Nr. 1, 24. September 2010 (2010-09-24), Seiten 1-8, XP060010644, DOI: 10.1117/12.881762 [gefunden am 1901-01-01]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Auswertung von Signalen der Fluoreszenzrastermikroskopie mit simultaner Anregung und Detektion der Fluoreszenz in verschiedenen Fokalebenen einer Probe mittels konfokaler Laser-Scanning-Mikroskopie, insbesondere zur Effizienzsteigerung der Fluoreszenzrastermikroskopie von dicken Proben sowie ein konfokales Laser-Scanning-Mikroskop (LSM) mit simultaner Fluoreszenz aus unterschiedlichen Fokalebenen.

Im Stand der Technik der konfokalen Fluoreszenzrastermikroskopie, wie z.B. in der DE 197 02 753 A1 beschrieben, sind vielfältige Bestrebungen bekannt, die Effektivität der Auswertung von Fluoreszenzproben zu verbessern.

Dabei divergieren die Lösungen in verschiedene Zielrichtungen, die

a) auf eine Reduzierung der Messzeiten trotz rasternd sequenziellen Bildaufbaus und

b) auf die unschärfefreie Abbildung (engl. blur-free imaging) durch einen sog. optischen Schnitt, d.h. auf die Abtrennung außerfokalen Fluoreszenzlichts vom fokalen Nutzsignal durch eine Konfokalblende,

gerichtet sind.

Des Weiteren sind die bekannten Vorteile der Laser-Scanning-Mikroskopie (Konfokalmikroskopie), wie optisches Schneiden (Unterdrückung außerfokaler Signale) und hohe Flexibilität, von den Nachteilen und Limitierungen begleitet:

1) Zeitaufwand der sequenziellen Datenaufnahme,

2) Probenschädigung (z.B. Bleichen) durch hohe Intensität im Fokus und

3) Probenschädigung (z.B. Bleichen) durch ungenutzte außerfokale Intensität.

Die einfachste Lösung für beide obige Zielrichtungen a) und b), die in der Erhöhung der Intensität des Anregungslichts bestehen würde, ist als singulärer Lösungsansatz nicht praktikabel, weil damit ein unerwünschtes Ausbleichen der Probe einhergeht. Deshalb wird die Zielrichtung a) z.B. durch Parallelisierung der Messungen (Multispot-LSM, Spinning Disc) gewählt, also das simultane Abrastern der Probe mit mehreren Fokussen, die dann durch jeweils ein eigenes bzw. gemeinsam genutztes konfokales Pinhole auf je ein Detektorelement oder auf ein Detektorarray (Kamera, Spinning Disc) abgebildet werden. Dadurch wird entweder die Aufnahmegeschwindigkeit erhöht oder in gleicher Zeit eine größere Fläche abgerastert. Somit kann bei gegebener Bildaufnahmerate auch der Nachteil 2) dadurch reduziert werden, dass die Fokalintensität um den Faktor der Parallelisierung kleiner gewählt werden kann. An der "Verschwendung" der außerfokalen Photonen (Nachteil 3) ändert sich dabei aber nichts. Der letzterwähnte Aspekt stellt - neben der unerwünschten Probenbelastung - eine fundamentale Limitierung der konfokalen Methode dahingehend dar, dass viele Ebenen der Probe beleuchtet, aber nicht ausgewertet werden, obwohl die integrierte Anregungsleistung in jeder Ebene gleich ist.

Möglichkeiten zur Verringerung der Probenbelastung durch die parallelisierte Bildaufnahme sind zum Beispiel in US 5,239,178 oder US 6,028,306 mit N separaten, gleichzeitig in der Fokalebene beleuchteten und gemessenen Messvolumina (vereinfacht als Messpunkte bezeichnet) beschrieben. Hierbei kann die Probe mit weniger Intensität pro Beleuchtungsstrahl zur gleichen Zeit an N Punkten vermessen werden. Die Beleuchtungsintensität wird dabei um den Faktor 1/N gesenkt und die Pixelverweilzeit um den Faktor N verlängert, sodass die Bildwiederholrate (engl. "frame rate") identisch und das SNR vergleichbar mit der gerasterten Aufnahme mittels eines einzelnen Messvolumens sind. Zwar ist die in die Probe eingetragene Energiedosis dieselbe, sie ist jedoch räumlich verteilt, sodass die probenschädigende Spitzenintensität je Beleuchtungspunkt verringert werden kann.

Eine vielfach parallele Bildaufnahme mit denselben Vorteilen gelingt auch mittels einer rotierenden Nipkow-Scheibe oder mit linienförmiger Abtastung.

Eine alternative Art der parallelisierten Bildaufnahme besteht in der simultanen Abbildung von Messpunkten aus unterschiedlichen Bildebenen, eine sog. axialmultifokale Abbildung.

So ist beispielsweise aus der DE 103 56 416 A1 bekannt, unter Zugrundelegung monochromatischer konfokaler Mikroskopie mit Hilfe eines optisch dezentrierten diffraktiv-optischen Elementes (DOE, z.B. Phasengitter) und einer Sammeloptik eine simultane Abbildung mehrerer entlang der optischen Achse des Mikroskopobjektivs liegender separater Messvolumina zu erreichen, indem die unterschiedliche Krümmung von Wellenfronten, die aus unterschiedlich entfernten Probenebenen stammen, ausgenutzt wird, um diese durch das DOE in verschiedene Beugungsordnungen zu verteilen und in eine einzige Ebene, vorzugsweise die Konfokalblendenebene, abzubilden. Mit einer Konfokalblende werden dann alle Wellenlängen außer der des Beleuchtungslichts diskriminiert, wodurch diese multifokale Abbildungsvariante jedoch für Fluoreszenzmessungen (wegen der Stokes-Verschiebung und der spektralen Bandbreite der Fluoreszenzemission) ungeeignet ist.

Nach demselben Prinzip arbeiten Systeme zur multifokalen Bildgebung in der Weitfeld-Mikroskopie, wie beispielsweise beschrieben von Blanchard et al.: Simultaneous multiplane imaging with a distorted diffraction grating, (in: Appl. Opt. 38 32 (1999) 6692-6699), von Dalgarno et al.: Multiplane imaging and three-dimensional nanoscale particle tracking in biological microscopy (in: Optics express 18 2 (2010) 877-884) sowie von Abrahamsson et al.: Fast multicolor 3D imaging using aberration-corrected multifocus microscopy (in: Nature Methods 10 1 (2013) 60-63).

Ferner zählen zum Stand der Technik der Fluoreszenzmikroskopie Methoden der Fluoreszenz-Korrelationsanalyse. Dabei ist insbesondere SOFI (Superresolution Optical Fluctuation Imaging) zu nennen, die in folgenden Schriften beschrieben ist:

- WO 2010/141608 A1
- T.Dertinger, R.Colyer, G.Iyer, S.Weiss & J.Enderlein: Fast, background-free, 3D superresolution optical fluctuation imaging (SOFI)" (in: PNAS 106 52 (2009), 22287-92)
- T.Dertinger, R.Colyer, R.Vogel, J.Enderlein, & S.Weiss: Achieving increased resolution and more pixels with Superresolution Optical Fluctuation Imaging (SOFI) (in: Optics express, 18 18 (2010) 18875-84)
- S. Geissbuehler, C. Dellagiacoma, and T. Lasser: Comparison between SOFI and STORM (in: Biomed. Opt. Express 2 3 (2011) 408-420).

Mittels SOFI werden bei Weitfeld-Fluoreszenzdetektion (direkte Abbildung einer Ebene der Probe mittels Kamera) Fluktuationen von Fluoreszenzemittern mit einer definierten zeitlichen Korrelation ausgewertet, um eine Fluoreszenzabbildung mit gegenüber dem Beugungslimit erhöhter Auflösung zu erhalten. Der Grad der Auflösungssteigerung hängt dabei von der Ordnung der Korrelationsfunktion ab, die ausgewertet werden kann. Letzteres wiederum hängt stark vom fluktuierenden System und der Signalqualität ab. Notwendige Vorraussetzungen für die Anwendung von SOFI sind:

- das fluoreszierende System (Molekül) muss mindestens zwei unterscheidbare Fluoreszenzzustände aufweisen (z.B. An-Aus),
- unterschiedliche Emitter (Moleküle) müssen unabhängig voneinander und stochastisch zwischen diesen Zuständen wechseln, sog. "Blinken",
- das Wechseln zwischen den Zuständen muss mit einem Bildsensor (Flächendetektor) zeitlich erfassbar sein.

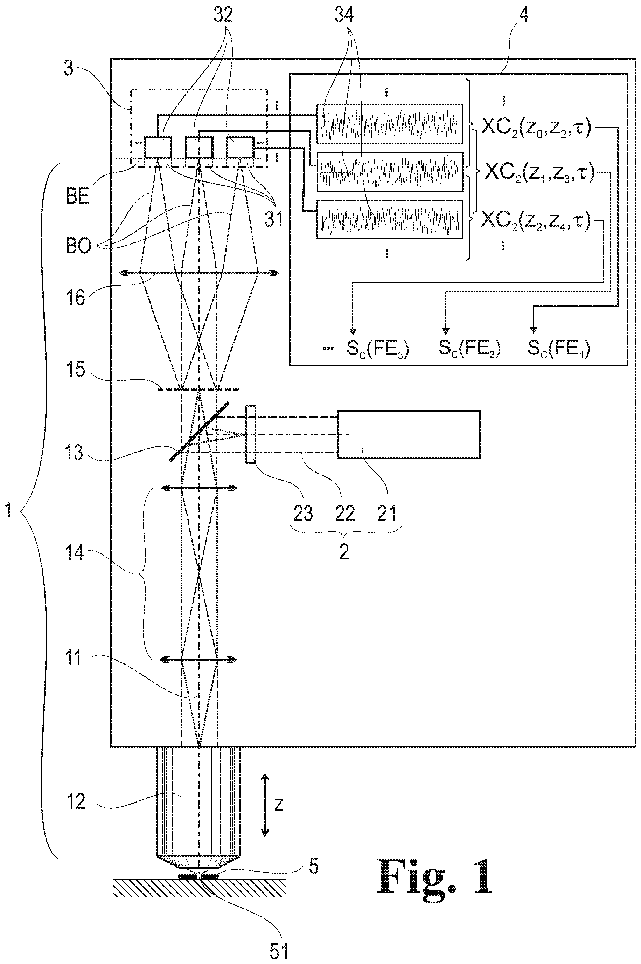

Die ersten beiden Voraussetzungen sind prinzipiell für eine große Zahl (im Prinzip alle) fluoreszierender Moleküle (organische Farbstoffe und Proteine) erfüllt; der "Aus"-Zustand kann beispielsweise ein Triplett-Zustand (gemäß Fig. 1 aus J. Widengren: "Fluorescence-based transient state monitoring for biomolecular spectroscopy and imaging", J. R. Soc. Interface 7 49 (2010) 1135-1144) oder ein anderer nicht-radiativ zerfallender Zustand sein. Denkbar ist zudem, dass auch strahlende Relaxationspfade über die Wellenlänge diskriminierbar sind. Dennoch konnte SOFI bislang nur für spezielle Fluoreszenz-Systeme demonstriert werden, da die Zeitskalen, innerhalb derer das Triplett-Aus auftritt, selbst für die verfügbaren schnellsten kontinuierlich zu betreibenden Flächendetektoren (CMOS, CCD) viel zu kurz sind. Die entsprechenden Zeiten sind beispielsweise aus einer typischen Messkurve eines Jablonski-Diagramms (siehe Fig. 1 in J. Widengren, a.a.O.) ablesbar. Gezeigt ist dort als (a) ein 3-Zustands-Modell eines Fluorophors und als (c) eine FCS-Messung (engl.: Fluorescence Correlation Spectroscopy), wobei die Lebensdauer des Triplett-Zustands $t_T$ dabei im Bereich von Mikrosekunden liegt.

Beispiele für spezielle Systeme, die dennoch detektierbar sind, stellen Quantenpunkte [Dertinger et al. PNAS 2009] dar, die das Blinken auf fast allen Zeitskalen zeigen, und dSTORM-Systeme [Geissbühler et. al., Opt. Express 2011], bei denen durch die beim dSTORM-Verfahren bekannte Anpassung der chemischen Umgebung und der Anregungsbedingungen das Blinkverhalten der Emitter auf durch Kameras erfassbare Zeitintervalle gebracht wird. Somit sind SOFI und dSTORM-Verfahren nicht für die breite Anwendung von herkömmlichen Fluoreszenzfarbstoffen geeignet.

Im Folgenden wird das Wort "Farbstoffe" sowohl für endogene (Eigenfluoreszenz) und exogene Fluoreszenzfarbstoffe als auch für fluoreszierende Proteine verwendet, die das für das Verfahren notwendige Zeitverhalten zeigen.

Ausgehend von einem Fluoreszenzrastermikroskop in Form eines multikonfokalen Laser-Scanning-Mikroskops, z.B. gemäß der nicht vorveröffentlichten DE 10 2014 002 328, mit einer im Beobachtungsstrahlengang zwischen einem Strahlvereiniger und der Bildebene angeordneten ersten diffraktiven Optik zur Aufspaltung von Lichtstrahlen in Strahlenbündel verschiedener Beugungsordnungen, die zueinander unterschiedliche sphärische Phasen aufweisen, mit einer zweiten diffraktiven Optik zur Kompensation von durch die erste diffraktive Optik erzeugten chromatischen Aberrationen sowie einer Sammeloptik zur Fokussierung der aufgespaltenen Strahlenbündel in die Bildebene, wodurch objektseitig eine Reihe verschiedener entlang der optischen Achse des Mikroskopobjektivs angeordneter disjunkter Messvolumina simultan (entlang den unterschiedlichen Beugungsordnungen der diffraktiven Optik) in die Bildebene abgebildet wird, verbleibt bei der multikonfokalen Detektion mit dem vorstehend beschriebenen Laser-Scannig-Mikroskop das Problem, dass man auf jedem Sensor wiederum konfokal detektieren müsste, um ein Bild mit optischer Tiefenauflösung (sog. Sectioning) zu bekommen. Hierbei ist es unerheblich, ob das Licht durch ein physikalisches Pinhole geht oder durch Nutzung der Pixel-pro-Tiefenebene-Separation auf dem Sensor konfokal gefiltert wird. Deshalb ist aber als nachteilig zu erwarten, dass die Detektion keinesfalls lichteffizienter wird als im sequentiellen Modus des Sectioning mit konfokalem Fluoreszenzmikroskop.

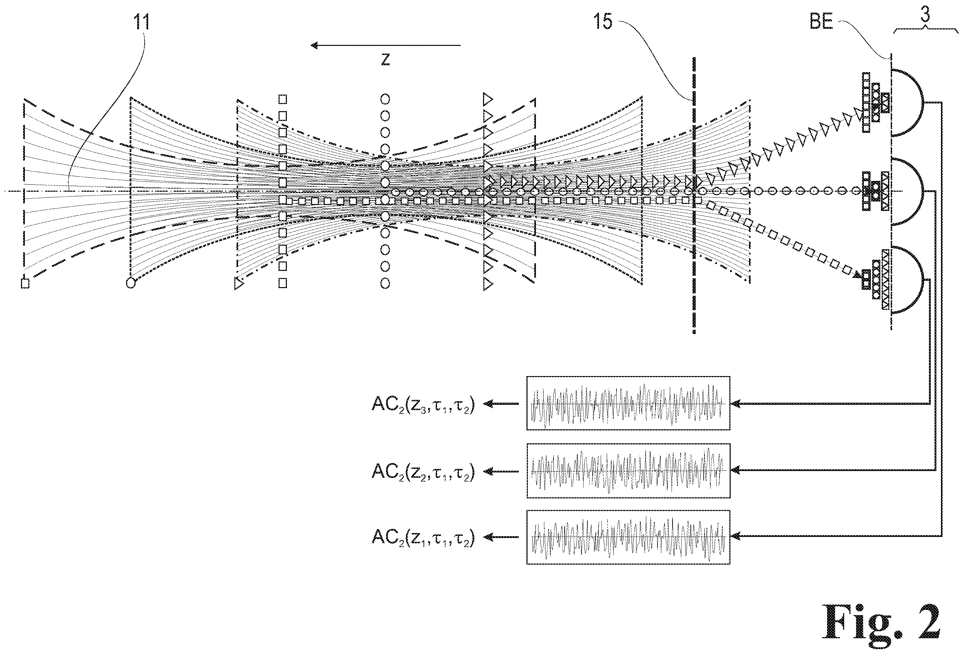

Die "Lichtverluste" lassen sich dadurch erklären, dass bei einer Aufteilung des Lichts mit gechirpten Gittern auch Licht in jene Beugungsordnungen geht, die "unscharf" abbilden. Ein solcher Effekt ist gleichartig zu dem bei Nutzung von Neutralteilern, wie beispielsweise von Dalgarno et al. (in: Optics express 18 2 (2010) S. 881, Fig. 2) beschrieben. Hier wird jeweils eine Ebene nur mit einem Teil des Lichtes, welcher durch das Teilungsverhältnis des Strahlteilers gegeben ist, scharf abgebildet und demzufolge die Eingangsintensität im Teilungsverhältnis geschwächt. Die Aufteilung des Lichts mit gechirpten Gittern wirkt genauso, als würde man mit N Neutralteilern in N verschiedene Ebenen blicken. Das macht die multi(kon)fokale Anordnung zwar schneller (Parallelisierung in z-Richtung), allerdings würde man bei der konfokalen Detektion auf einem Sensorelement dasjenige Licht verlieren, welches unscharf aus anderen Ebenen am jeweiligen Pinhole ankommt. Ziel einer parallelisierten Anordnung sollte es aber sein, alles Licht der Emitter aus den jeweils konjugierten Sensorebenen (d.h. aus jenen Ebenen der Probe, die das jeweilige Sensorelement scharf abbildet) auszuwerten.

Falls jeweils nur ein leuchtendes Teilchen innerhalb der Anregungs- und Detektions-PSF in einem sog. elongierten Fokusbereich vorhanden wäre, könnte man durch simultane nichtkonfokale Messung aller Ebenen mit einem pixelierten Sensor das Signal dem richtigen Ort in der Probe zuordnen.

Damit hätte man ein "quasi-konfokales Bild" mit einer erhöhten Effizienz erreicht, dessen Generierung im Prinzip dem Vorgehen bei einer dreidimensionalen Entfaltung entspricht, wobei die gemessene 3D-Lichtverteilung dann auf verschiedene Sensoren verteilt vorliegt. Die Annahme eines einzelnen leuchtenden Teilchens ist aber in realen Messungen so gut wie nie gegeben, sodass sich bei realen Proben die Signale aus in Richtung der optischen Achse versetzten Ebenen auf den Sensorsegmenten überlagern und sich bei a priori unbekannter Probenstruktur nicht mehr eindeutig den Ebenen zuordnen lassen, weil wegen des Fehlens einer konfokalen Diskriminierung der Signale aus den verschiedenen Ebenen ein erhebliches Übersprechen der Signale aus "unscharf abgebildeten" Ebenen auf die Detektoren für durch das DOE-System separierte Beugungsordnungen zu verzeichnen ist. Zudem ist die PSF im Normalfall symmetrisch, sodass ohne weitere Informationen die nach "oben" und "unten" defokussierten Anteile nicht unterschieden werden können.

Der Erfindung liegt deshalb die Aufgabe zugrunde, eine Möglichkeit zur Auswertung von Signalen der Fluoreszenzrastermikroskopie mit einer hohen Auflösung und Tiefendiskriminierung (sog. Sectioning), vergleichbar mit denen eines Konfokalmikroskops, zu finden, ohne dass bei Verwendung eines konfokalen Fluoreszenzrastermikroskops (z.B. gemäß DE 10 2014 002 328), bei dem mittels diffraktiver Optik zur Bündelaufspaltung den Bündeln in jeder Beugungsordnung eine von den anderen Beugungsordnungen verschiedene sphärische Phase aufgeprägt wird, die somit unterschiedlich gekrümmten Wellenfronten aus verschiedenen Fokalebenen in unterschiedliche Beugungsordnungen aufgeteilt und ausschließlich auf der Beleuchtungswellenlänge detektiert werden, ein Großteil der Fluoreszenzphotonen an der Konfokalblende (Pinhole) verlorengeht. D.h., in z-Richtung (axial) parallel eintreffende Signale aus unscharf abgebildeten Ebenen sollen nicht durch (reelle oder virtuelle) konfokale Pinholes ausgefiltert werden, sondern zum gewünschten Signal der scharf (konfokal) abgebildeten Ebene beitragen.

Erfindungsgemäß wird die Aufgabe bei einem Verfahren zur Auswertung von Signalen der Fluoreszenzrastermikroskopie mit simultaner Anregung und Detektion der Fluoreszenz in verschiedenen Fokalebenen einer Probe mittels konfokaler Laser-Scanning-Mikroskopie durch die folgenden Schritte gelöst:

- Einkoppeln mindestens eines Beleuchtungsstrahls mittels eines Strahlvereinigers in einen mikroskopischen Beobachtungsstrahlengang, der von einem Messvolumen der Probe bis zu einer Bildebene definiert ist und entlang einer optischen Achse ein Mikroskopobjektiv, den Strahlvereiniger zur Einkopplung des Beleuchtungsstrahls und ein in der Bildebene angeordnetes Detektorarray aufweist,
- Fokussieren des Beleuchtungsstrahls mit dem Mikroskopobjektiv ins Messvolumen, wobei der Beleuchtungsstrahl in einer Beleuchtungspupille eine Strahlformung zur Erzeugung eines langgestreckten Fokus durchläuft,
- Sammeln und Kollimieren von im Messvolumen erzeugtem Fluoreszenzlicht mittels des Mikroskopobjektivs und Weiterleiten von resultierenden Lichtstrahlen auf eine zwischen Strahlvereiniger und Bildebene angeordnete diffraktive Optik,
- Aufspalten der im Messvolumen erzeugten Lichtstrahlen in Strahlenbündel unterschiedlicher Beugungsordnungen mittels der diffraktiven Optik und Abbilden der unterschiedlichen Beugungsordnungen mittels einer Detektionsoptik auf separate Detektorbereiche des Detektorarrays, wobei die diffraktive Optik den Lichtstrahlen jeder Beugungsordnung eine zu den anderen Beugungsordnungen unterschiedliche sphärische Phase aufprägt, sodass Fluoreszenzlicht aus verschieden tiefen Fokalebenen des Messvolumens unterschiedlichen Beugungsordnungen zugeordnet und ohne konfokale Diskriminierung auf die separaten Detektorbereiche abgelenkt wird, von denen Fluoreszenzlicht aus zugeordneten Fokalebenen des Messvolumens sowie ein Fluoreszenz-Übersprechen aus unscharf abgebildeten benachbarten Fokalebenen des Messvolumens in elektronische Fluoreszenzsignale gewandelt werden, und

- Zuordnen der Fluoreszenzsignale, die aus unterschiedlichen Fokalebenen des Messvolumens stammen und längs der Beugungsordnungen durch das Übersprechen überlagert sind, zu im Messvolumen definierten Fokalebenen mittels korrelationsbasierter Zuordnung der Fluoreszenzsignale auf Basis unterscheidbaren Blinkverhaltens von fluoreszierenden Farbstoffen im Messvolumen.

Vorteilhaft erfolgt die Zuordnung der Fluoreszenzsignale zu den Fokalebenen durch Kreuzkorrelation zweiter Ordnung von Signalfolgen zweier Detektorbereiche benachbarter Beugungsordnungen.

Die Kreuzkorrelation der Signalfolgen wird zweckmäßig über eine an das Fluoreszenzblinken der Farbstoffe angepasste Zeitdauer durchgeführt.

Vorteilhaft werden dabei Farbstoffe verwendet mit einer Dauer eines Aus-Zustandes des Fluoreszenzblinkens zwischen 0,1 $\mu$s und 500 $\mu$s, bevorzugt zwischen 1 und 100 $\mu$s, insbesondere zwischen 5 und 50 $\mu$m.

Die Korrelation von Signalfolgen wird über eine Anzahl von Frames, die dem 10- bis 1000-fachen eines Aus-Zustandes des Fluoreszenzblinkens entspricht, durchgeführt. Zweckmäßig erfolgt sie über eine Anzahl von Frames vom 20- bis 50-fachen des Aus-Zustandes des Fluoreszenzblinkens.

Zusätzlich zur Kreuzkorrelation kann eine 3D-Entfaltung durchgeführt werden.

Das Messvolumen wird vorteilhaft mit einem elongierten Fokus beleuchtet, um eine vorgegebene Anzahl der Fokalebenen in der Tiefe des Messvolumens weiter aufzuspreizen.

Dabei erweist es sich als vorteilhaft, dass sich die Aufspreizung der Fokalebenen und eine erhöhte Auflösung in der Tiefe des Messvolumens wahlweise einstellen lassen, indem mittels eines Zoomobjektivs zwischen der Probe und der diffraktiven Optik der elongierte Fokus eingestellt wird.

Der elongierte Fokus kann vorteilhaft durch Unterfüllen der Eingangspupille des Mikroskopobjektivs eingestellt werden. Dabei wird ergänzend zur Korrelation der Fluoreszenzsignale in der Tiefe bei elongiertem Fokus, der durch Unterfüllen der Eingangspupille des Mikroskopobjektivs erweitert wird, eine zusätzliche Korrelation von in lateralen Ebenen der Probe abgetasteten Fluoreszenzsignalen mit erhöhter lateraler Auflösung erreicht.

Ergänzend zur Korrelation in der Tiefe kann zweckmäßig eine zusätzliche Korrelation für in lateralen Ebenen der Probe abgetastete Fluoreszenzsignale durchgeführt werden. Des Weiteren wird die Aufgabe bei einem konfokalen Fluoreszenzrastermikroskop mit einem optischen System, das einen mikroskopischen Beobachtungsstrahlengang von einem Messvolumen bis zu einer Bildebene definiert und ein Mikroskopobjektiv, einen Strahlvereiniger zur Ankopplung eines Beleuchtungssystems ein Detektorarray und eine in der Bildebene angeordnete Blende vor dem Detektorarray aufweist, und einem Beleuchtungsstrahlengang, der das Beleuchtungssystem mit einem Laser und Mitteln zur Erzeugung eines Beleuchtungsstrahls mit einem elongierten Fokus enthält, dadurch gelöst, dass das optische System im Beobachtungsstrahlengang zwischen dem Strahlvereiniger und der Bildebene eine diffraktive Optik zur Aufspaltung von Lichtstrahlen in Strahlenbündel längs unterschiedlicher Beugungsordnungen, wobei den Strahlenbündeln jeder Beugungsordnung eine von den anderen Beugungsordnungen verschiedene sphärische Phase aufgeprägt ist, und eine Detektionsoptik zur Fokussierung der aufgespalteten Strahlenbündel auf separate Detektorbereiche des Detektorarrays umfasst, dass das Detektorarray eine der Anzahl der Beugungsordnungen entsprechende Zahl von separat auslesbaren Detektorbereichen aufweist, sodass in den Detektorbereichen jeweils aus einer definierten Fokalebene in der zugeordneten Beugungsordnung ankommendes Fluoreszenzlicht sowie aus benachbarten Fokalebenen in dieselbe Beugungsordnung übersprechendes Fluoreszenzlicht aufnehmbar ist, und dass den Ausgängen der Detektorbereiche eine Auswerte- und Steuereinheit zur Zuordnung der aus gleichen Fokalebenen stammenden, aber von verschiedenen Detektorbereichen empfangenen Fluoreszenzsignale nachgeordnet ist, die Mittel zur Korrelation von unterschiedlichen Signalanteilen und Zuordnung korrelierender Signalanteile zu jeweils genau einer Fokalebene auf Basis unterscheidbaren Blinkverhaltens von fluoreszierenden Farbstoffen im Messvolumen enthält.

Vorteilhaft ist die diffraktive Optik als ein gechirptes Gitter ausgebildet.

Es erweist sich als besonders vorteilhaft, dass den Lichtstrahlen jeder Beugungsordnung durch die diffraktive Optik eine um ein jeweils ganzzahliges Vielfaches von den anderen Beugungsordnungen verschiedene sphärische Phase aufgeprägt ist.

Als Mittel zur Ausbildung eines elongierten Fokus kann zweckmäßig eine Zoomoptik zur Unterfüllung der Eintrittspupille des Mikroskopobjektivs vorhanden sein.

Als besonders bevorzugtes Mittel zur Ausbildung eines elongierten Fokus weist der Laser zur Anregung der Probe Mittel zur Erzeugung eines Besselstrahls oder anderen nicht-diffraktiven Strahls auf.

In beiden Fällen weist es sich als günstig, dass eine Zoomoptik zur Unterfüllung der Eintrittspupille des Mikroskopobjektivs vorgesehen ist, um die Abstände der Fokalebenen weiter aufzuspreizen.

Zusätzlich können Mittel zur lateralen Abtastung vorhanden sowie Verknüpfungsmittel zur Erzeugung eines Stapels von lateral zweidimensional abgetasteten Frames in verschiedenen Fokalebenen aus pixelweise aufgenommenen Fluoreszenzsignalen und durch Kreuzkorrelation den verschiedenen Fokalebenen zugeordneten Signalanteilen vorgesehen sein.

Dabei ist in der Auswerte- und Steuereinheit zur Zuordnung von Signalanteilen genau einer Fokalebene vorteilhaft ein Kreuzkorrelator zur Analyse von Fluoreszenzsignalen aus jeweils vertikal benachbarten Fokalebenen und lateral benachbarten Pixeln der Frames vorgesehen.

In einer weiteren Ausführung ist in der Auswerte- und Steuereinheit zur Zuordnung von Signalanteilen zu genau einer Fokalebene eine Prozessoreinheit zur 3D-Entfaltung von Fluoreszenzsignalen aus jeweils vertikal benachbarten Fokalebenen und lateral benachbarten Pixeln der Frames vorgesehen.

Die Erfindung basiert auf der Überlegung, dass eine deutlich höhere Photoneneffizienz (= Verhältnis von detektierten Fluoreszenzphotonen / eingestrahlten Photonen) der Signale der Fluoreszenzrastermikroskopie bei Anwendung eines konfokalen Laser-Scanning-Mikroskops (CLSM) nur durch weitere Parallelisierung der Detektion und Auswertung erreicht werden kann, weil die Anregungsleistung ohnehin nicht beliebig erhöht werden darf, wenn die Photoschädigung der Proben weitestgehend vermieden werden soll. Bei der konfokalen Fluoreszenzrastermikroskopie ist eine weitere Parallelisierung von Signalaufnahmen aber nur noch in Richtung der optischen Achse möglich, wenn die aus "unscharfen" Fokalebenen stammenden Signalanteile, die bisher durch konfokale Diskriminierung eliminiert wurden, jetzt mit zur Signalbildung auf dem Detektor zugelassen werden. Damit ist allerdings das Problem verbunden, dass sich die Signale aus verschiedenen in Richtung der optischen Achse versetzten Ebenen auf den Detektorsegmenten überlagern und sich ohne Kenntnis der Probenstruktur nicht mehr eindeutig den Ebenen zuordnen lassen.

Die beabsichtigten Ziele, (a) die Fotoschädigung der Proben zu reduzieren und (b) die Aufnahmezeiten für vorgegebene 3D-Volumina (d.h. für dicke Proben) zu verringern, werden nur dadurch realisierbar, dass die eingestrahlte Leistung in allen Fokalebenen nahezu konstant ist, sodass die daraus erzeugte Fluoreszenz lediglich in allen Fokalebenen simultan ausgelesen werden muss. Letzteres ist wiederum nur möglich, wenn auch Signalanteile, die nicht aus der primären Fokalebene stammen, zur Signalaufnahme zugelassen und anschließend richtig den Fokalebenen zugeordnet werden. Dieses Problem wird erfindungsgemäß durch Korrelation der Signale aus den Detektorbereichen gelöst. Da verschiedene Emitter unabhängig voneinander stochastisch "blinken" (d.h. unterschiedliche Fluktuationen im Emissionsverlauf aufweisen), ist es möglich, korrelierende Fluoreszenzsignale von benachbarten Detektorbereichen einem bestimmten Emitter zuzuordnen. Letzteres ist für nahezu alle Emitter der Fall, wobei sich aber die Mechanismen und damit die Zeitskalen der Fluktuationen für unterschiedliche Ebenen unterscheiden, sodass die Fluoreszenzemitter in den unterschiedlichen Ebenen in Richtung der optischen Achse ein nicht korreliertes Emissionsverhalten aufweisen, wodurch sie nachträglich separierbar sind.

Die Erfindung wird nachfolgend anhand von Ausführungsbeispielen und Abbildungen näher erläutert. Dabei zeigen die Zeichnungen:

Fig. 1: eine schematische Darstellung des erfindungsgemäßen Messverfahrens;

Fig. 2: eine schematische Darstellung eines konfokalen Laser-Scanning-Mikroskops (mit nur symbolisch dargestelltem DOE und aus der Konfokalebene entferntem Pinhole) zur Fluoreszenzrastermikroskopie, bei dem die Detektion in drei Ebenen (gestrichelt) simultan erfolgt, die zugeordneten Detektor-Elemente wegen Verzichts auf konfokale Detektion übersprechen und bei dem die Zuordnung der jeweiligen Detektions-PSF durch unterschiedliche Füllmuster kodiert ist;

Fig. 3a: eine schematische Darstellung wie in Fig. 2, mit erfindungsgemäß nachgeordneter Kreuzkorrelation der übersprechend aufgenommenen Signale zur Generierung in z-Richtung separierter effektiver Pixel;

Fig. 3b: eine schematische Darstellung wie in Fig. 3a, mit erfindungsgemäß nachgeordneter Kreuzkorrelation der übersprechend aufgenommenen Signale zur Generierung in z-Richtung separierter effektiver Pixel sowie zusätzlicher Pixel von Zwischenebenen, die sich durch Kreuzkorrelation von Fluoreszenzsignalen benachbarter Detektoren ergeben;

Fig. 3c: eine schematische Darstellung wie in Fig. 3b, mit erfindungsgemäß nachgeordneter Kreuzkorrelation zur Generierung in z-Richtung separierter effektiver Pixel und Zwischenpixel, wobei die Erfassung der übersprechenden Signale jedoch mit Mehrelementsensoren erfolgt;

Fig. 4: das Ergebnis einer Simulation, bei dem die Fluoreszenzsignale einer angenommenen Struktur von vier Punkten in der x-z-Ebene mit dem erfindungsgemäßen Verfahren auf die jeweiligen Fokalebenen zurückgeführt werden;

Fig. 5a: eine schematische Darstellung des Strahlengangs eines erfindungsgemäßen multifokalen LSM mit nachgeschalteter Korrelationsanalyse für vereinfacht angenommene fünf Beugungsordnungen mit übersprechenden Fluoreszenzsignalen, wie sie in Fig. 3 schematisch für drei Beugungsordnungen dargestellt sind,

Fig. 5b: eine schematische Darstellung eines CLSM mit erfindungsgemäßer multikonfokaler Korrelationsanalyse für vereinfacht angenommene fünf Beugungsordnungen mit übersprechenden Fluoreszenzsignalen, wie in Fig. 5a dargestellt,

Fig. 6: ein Ablaufschema für die optimale EDOF-Einstellung über die Scan-Organisation bis zur Korrelationsanalyse mit Gewichtung zur Erzeugung eines kompletten Frame-Stacks von Korrelationssignalen als äquivalente 3D-Darstellung einer in der Probe erfassten Intensitätsstruktur.

Der grundlegende Verfahrensablauf, der anhand eines in Fig. 1 als Prinzipskizze dargestellten konfokalen Laser-Scanning-Mikroskops ablesbar ist, und die Auswertung von Signalen der Fluoreszenzrastermikroskopie mit simultaner Anregung und Detektion der Fluoreszenz in verschiedenen Fokalebenen FE einer Probe 5 zum Gegenstand hat, weist die folgenden Schritte auf:

- Einkoppeln mindestens eines Beleuchtungsstrahls 22 mittels eines Strahlvereinigers 13 in einen mikroskopischen Beobachtungsstrahlengang 1, der von einem Messvolumen 51 der Probe 5 bis zu einer Bildebene BE definiert ist und entlang einer optischen Achse 11 ein Mikroskopobjektiv 12, den Strahlvereiniger 13 und eine in der Bildebene BE angeordnete Detektoreinheit 3 umfasst,
- Fokussieren des Beleuchtungsstrahls 22 mit dem Mikroskopobjektiv 12 ins Messvolumen 51, wobei der Beleuchtungsstrahl 22 in einer Beleuchtungspupille eine strahlformende Phasenmaske 23 zur Erzeugung eines langgestreckten Fokus durchläuft,
- Sammeln und Kollimieren von im Messvolumen 51 erzeugtem Fluoreszenzlicht mittels des Mikroskopobjektivs 12 und Weiterleiten von resultierenden Lichtstrahlen auf eine zwischen Strahlvereiniger 13 und Bildebene BE angeordnete diffraktive Optik 15,
- Aufspalten der im Messvolumen 51 erzeugten Lichtstrahlen in Strahlenbündel unterschiedlicher Beugungsordnungen BO mittels der diffraktiven Optik 15 und Abbilden der unterschiedlichen Beugungsordnungen BO mittels einer Detektionsoptik 16 auf separate Detektorbereiche 31 des Detektorarrays 3, wobei die diffraktive Optik 15 den Lichtstrahlen jeder Beugungsordnung BO eine zu den anderen Beugungsordnungen BO unterschiedliche sphärische Phase aufprägt, sodass Fluoreszenzlicht aus verschieden tiefen Fokalebenen FE des Messvolumens 51 unterschiedlichen Beugungsordnungen BO zugeordnet und ohne konfokale Diskriminierung auf die separaten Detektorbereiche 31 abgelenkt wird, von denen Fluoreszenzlicht aus zugeordneten Fokalebenen FE des Messvolumens 51 sowie ein Fluoreszenz-Übersprechen aus unscharf abgebildeten benachbarten Fokalebenen FE des Messvolumens 51 in elektronische Fluoreszenzsignale 34 gewandelt werden,
- Zuordnen der Fluoreszenzsignale 34, die aus unterschiedlichen Fokalebenen FE des Messvolumens 51 stammen und längs der Beugungsordnungen BO durch das Übersprechen überlagert sind, zu im Messvolumen 51 definierten Fokalebenen FE mittels korrelationsbasierter Zuordnung der Fluoreszenzsignale 34 auf Basis unterscheidbaren Blinkverhaltens von fluoreszierenden Farbstoffen im Messvolumen 51.

Das Verfahren hat nicht primär die Generierung einer superaufgelösten Abbildung zum Ziel, sondern die Trennung bzw. Zuordnung von Fluoreszenzsignalen verschiedener im Raum (i.e. in der Tiefe des Probenvolumens) angeordneter fluoreszierender Emitter, die sich bei einem multifokalen LSM infolge bewusst nicht streng konfokal diskriminierter Signaldetektion multifokal überlagern, durch nachträgliche Pixelkorrelationen zur Steigerung der Photoneneffizienz zu nutzen. Deshalb soll dieses Verfahren kurz mit CPI - correlated pixel imaging - bezeichnet werden. Der Hintergrund, warum dieser CPI-Lösungsansatz überhaupt funktioniert, wird im nachfolgenden Abschnitt eingehend erläutert.

Im Folgenden wird mehrfach von einem axial langgestreckten Fokusbereich oder auch kurz elongierten Fokus gesprochen, mit dem ausgedrückt sein soll, dass dieser gegenüber einem "normalen" Fokus, der bei einem Laser üblicherweise als gestreckte Intensitätsverteilung in z-Richtung über 0,5 - 150 $\mu$m "ausgedehnt" ist, auf das etwa Zwei- bis Zehnfache verlängert sein kann. Die Länge dieses elongierten Fokus richtet sich nach der erforderlichen Tiefe des z-Scans bzw. der Dicke der zu untersuchenden Probe 5. Ein solcher elongierter Fokus kann - gemäß Fig. 1 - durch eine Phasenmaske 23 innerhalb der Beleuchtungspupille sowie bei der Detektion mittels einer diffraktiven Optik 15 (als ein spezielles DOE - diffraktives optisches Element) erzeugt werden.

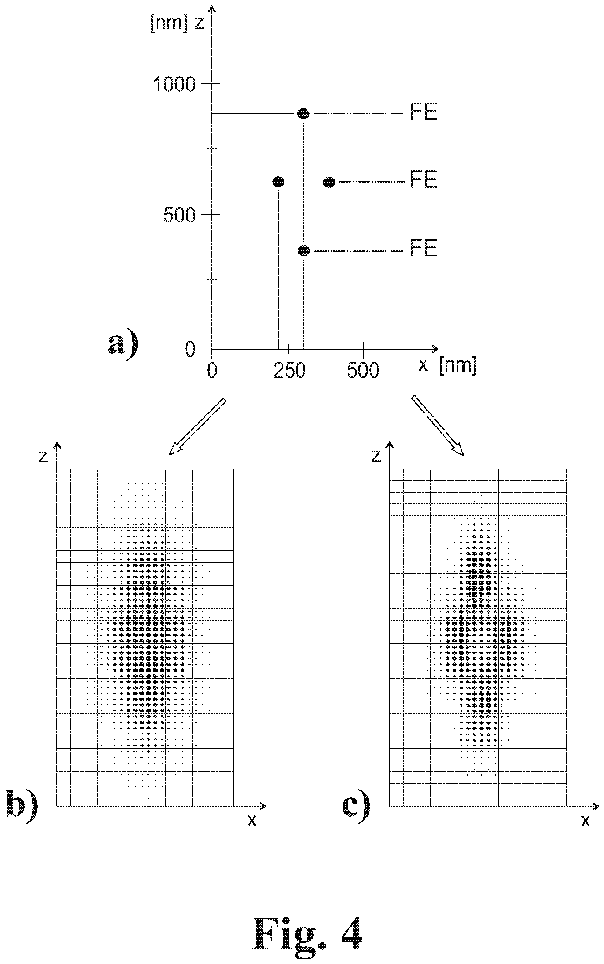

Wenn man in einer dicken Probe 5 in einem elongierten Fokus jeweils nur ein leuchtendes Teilchen hätte, könnte man durch simultane nichtkonfokale Messung aller Ebenen mit einem pixelierten Sensor (Matrixdetektor) den Signalanteil aus jeder Ebene dem zugehörigen Fokuspunkt und somit dem Ort in der Probe zuordnen und dort "addieren". Damit erhielte man ein "quasi-konfokales Bild" mit einer höheren Photoneneffizienz, als sie ein LSM mit streng konfokaler Detektion jemals erreichen kann. Dieses Vorgehen entspricht prinzipiell einer dreidimensionalen Entfaltung, wobei die gemessene 3D-Lichtverteilung dann auf verschiedene Sensoren verteilt vorliegt. Dies ist aber in realen Messungen so gut wie nie der Fall, da sich bei realen Proben 5 die Signale aus in Richtung der optischen Achse versetzten Ebenen auf den Detektorbereichen 31 überlagern und sich bei a priori unbekannter Probenstruktur 52 (vergleiche Beispiel in Fig. 4a) eben nicht mehr eindeutig den Fokalebenen FE zuordnen lassen.

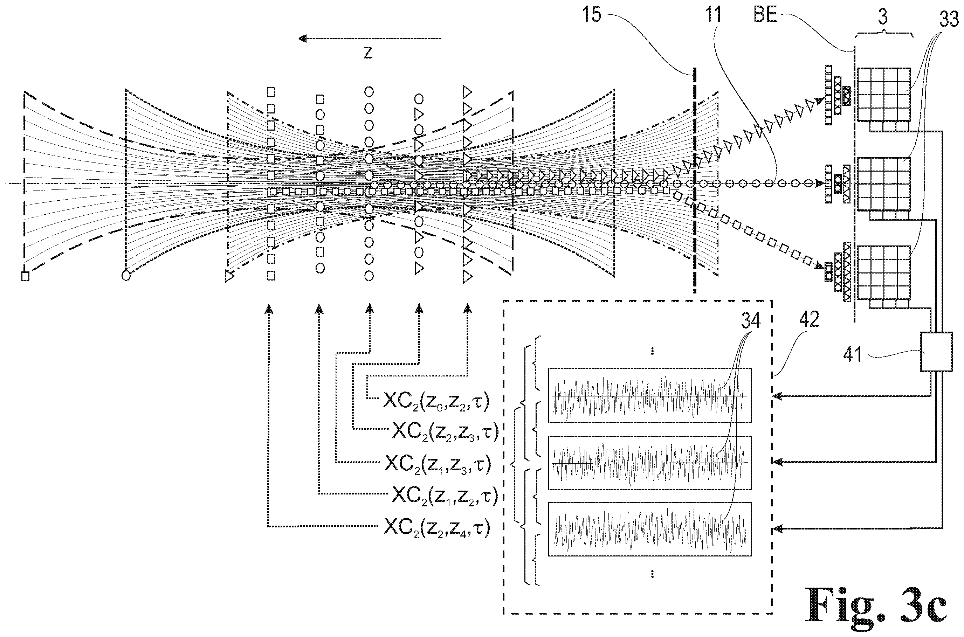

Der Realfall der Signalanteile ist in Fig. 2 schematisch für drei in z-Richtung versetzt liegende Fokalebenen FE dargestellt, wobei wegen des Fehlens einer konfokalen Diskriminierung der optischen Fluoreszenzsignale aus den verschiedenen Fokalebenen FE ein erhebliches Übersprechen der Signale aus "unscharf abgebildeten" Fokalebenen FE auf die für die separierten Beugungsordnungen BO zugewiesenen Detektorbereiche 31 erfolgt. Die nur schematisch angedeutete diffraktive Optik 15 erzeugt hier in vereinfachter Darstellung eine simultane Detektion aus drei mit unterschiedlichen Symbolen (Dreieck, Kreis, Quadrat) markierten Fokalebenen FE, den zugeordneten Detektorbereichen 31, die einzelne Detektoren 32 oder Segmente eines Detektorarrays 33 (nur in Fig. 3c dargestellt) sein können, sowie den jeweiligen Detektions-PSF's. Dabei ist die Zuordnung des Fluoreszenzlichts in der Detektoreinheit 3 zu den drei ausgewählten Fokalebenen FE in Fig. 2 durch unterschiedliche Strichdichten sowie ein zusätzliches Randsymbol kodiert. Die Balken vor den einzelnen Detektoren (in Fig. 2 Einzeldetektoren 32) symbolisieren die Signalanteile aus den jeweiligen Fokalebenen FE. Da diese aber von dem einzelnen Detektor 32 nur in Summe detektiert werden, besteht keine Möglichkeit, die Anteile den Fokalebenen FE zuzuordnen.

Das Detektorsignal jedes einzelnen Detektors 32 besteht aus einem Intensitätssignal über der Zeit. Diese Zeitserie wird mit fester Verzögerung (Time-lag) $\tau$ autokorreliert, um außerfokale Beiträge zu unterdrücken. Dabei ist das Autokorrelationssignal wie folgt definiert:

$$AC_2(n,\tau) = \frac{\left\langle \left(I(n,t) - \langle I(n,t)\rangle\right) * \left(I(n,t+\tau) - \langle I(n,t)\rangle\right)\right\rangle}{\left\langle\left(I(n,t)\right)\right\rangle^2}$$
$$= \left\langle \delta I(n,t+\tau) * \delta I(n,t)\right\rangle_t \quad , \qquad\qquad (1)$$

wobei AC die Autokorrelation oder Autokumulante und n die x-y-Ebene in der jeweiligen Fokalebene FE bedeuten.

Das heißt, das Zeitsignal wird nach obiger Vorschrift zeitverlagert mit sich selbst multipliziert. Mehrere dieser Messungen können dann statistisch gemittelt werden (sog. Ensemble average, welches basierend auf den hier zugrunde liegenden Prozessen als Zeitmittelung ausgeführt werden kann) Als Pixelsignal (oder Pixelwert) wird die Korrelationsamplitude verwendet. Alternativ kann auch die Autokorrelation der Zeitserie über mehrere (viele) $\tau$ erfolgen, dann werden die Korrelationsamplituden über diesen Zeitbereich aufintegriert (summiert). Idealerweise wird $\tau \neq 0$ dabei nicht berücksichtigt, da dann das Schrotrauschen unterdrückt würde.

Bei der Signalverarbeitung gemäß Fig. 2 ist jedoch nach wie vor eine Steigerung der Photoneneffizienz nicht möglich. Übersprechende Signalanteile gehen vollständig verloren.

Dieses Problem kann jedoch durch Korrelation der Fluoreszenzsignale 34 aus benachbarten Detektorbereichen 31 gelöst werden, wenn die Fluoreszenzemitter in den unterschiedlichen Fokalebenen FE ein nicht korreliertes Emissionsverhalten aufweisen. Falls verschiedene Emitter unabhängig voneinander stochastisch "blinken" (d.h. unterschiedliche Fluktuationen im Emissionsverlauf aufweisen), ist es möglich, korrelierende Fluoreszenzsignale 34 einem bestimmten Emitter zuzuordnen. Stochastisches Blinken liegt aber für nahezu alle Emitter vor, wobei sich die Mechanismen und damit die Zeitskalen der Fluktuationen für unterschiedliche Emitter unterscheiden und diese Eigenschaft für die Unterscheidung der unterschiedlichen Fokalebenen FE ausgenutzt werden kann.

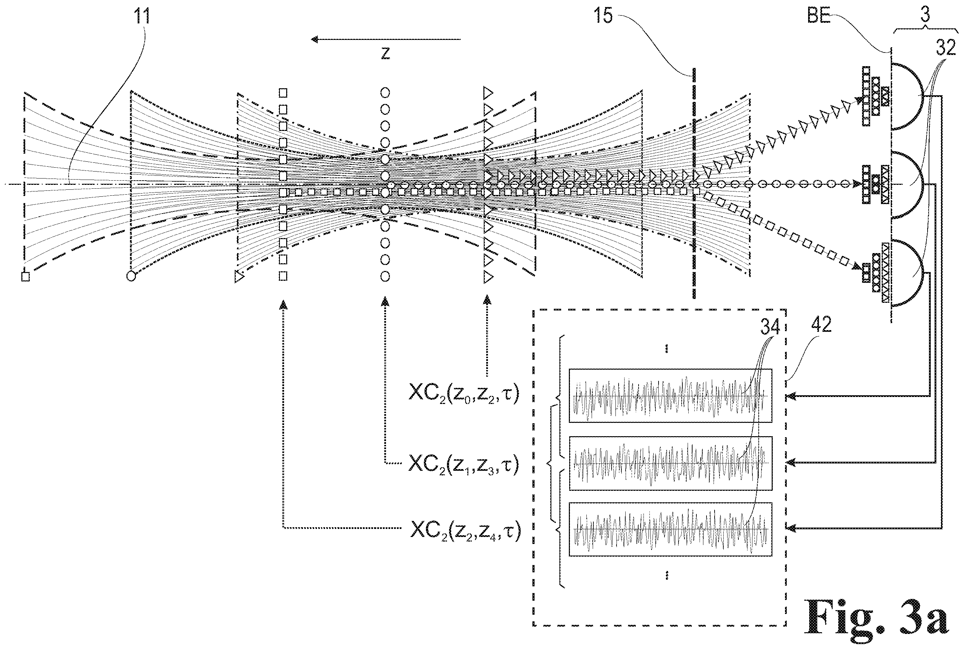

Fig. 3a zeigt die Darstellung von Fig. 2 nun mit einer Kreuzkorrelation der Fluoreszenzsignale 34 zur Selektion der zutreffenden Signalanteile auf den realen Pixelpositionen in z-Richtung. Damit das sensortechnisch anspruchsvolle Problem, die unterschiedlichen Zeitskalen der Fluoreszenzemitter, d.h. ihr stochastisches "Blinken", überhaupt auflösen zu können, gelöst werden kann, wird von einem weiteren Vorzug des Detektionsverfahrens, der quasi-konfokalen Messwertgewinnung, Gebrauch gemacht.

Das erfindungsgemäße Messverfahren arbeitet quasi-konfokal und ist nicht auf den Einsatz von hochauflösenden Kameras angewiesen, sondern kann aufgrund der begrenzten Zahl von nötigen Detektorbereichen 31 auf viel schnellere Detektoren zurückgreifen (SPAD-Arrays, PMT-Arrays, fasergekoppelte Detektoranordnungen, Kameras mit kleinen, programmierbar schnell auslesbaren Pixelbereichen). Damit ist das Verfahren nicht auf spezielle Emissionssysteme, wie Quantenpunkte und dSTORM-Farbstoffe, beschränkt. Vielmehr können mit dem erfindungsgemäßen Verfahren nun auch nahezu alle Standard-Farbstoffe eingesetzt werden, deren Triplett-Lebensdauer im Bereich 1-100 $\mu$s liegen kann.

Da es sich hier außerdem um ein "Punkt"-scannendes Verfahren handelt (wobei sich "Punkt" hier auf eine Position in einem lateralen x-y-Raster bezieht und man genau genommen von einem linienscannenden Verfahren sprechen sollte, bei dem sich die "Scan-Linie" in z-Richtung erstreckt), ist es sogar vorteilhaft, wenn diese Zeitskala kurz ist, um die für die Korrelation nötigen Blink-Zyklen bei möglichst kurzer Pixelverweilzeit zu erfassen.

Durch die für das vorliegende Verfahren eingesetzten schnellen Einzel- und kleinen Mehrelementdetektoren (mit besonders kurzen Auslesezeiten) wird oben benannte Zeitregime der Triplett-Lebensdauern von weniger als 100

μm (insbesondere 1-100 μm) erschlossen und damit eine große Farbstoffklasse für das vorliegende Verfahren verfügbar gemacht. Die Zeitskala für das "Punktscannen" (Pixelverweildauer) ist mit < 1 ms anzusetzen, wobei der Bereich 0,5-500 μs als vorteilhaft für den multivalenten Farbstoffeinsatz anzusehen ist. Bevorzugt werden "schnell blinkende" Farbstoffe (mit charakteristischen Blink-Zeiten von $\tau \leq 10$ μs) verwendet, um Pixelverweilzeiten zwischen 5 μs und 50 μs zu erreichen und damit ein laterales Flächenscannen zu ermöglichen, das heißt, einen Stack von bspw. 25 Frames mit je 256x256 Pixeln in wenigen Sekunden, z.B. 1-20 s, aufzunehmen.

Beim vorgestellten Verfahren wird die Kreuzkorrelation oder Kreuzkumulante gebildet, wobei folgende Varianten möglich sind:

1) die Ebene n+1 wird mit der Ebene n-1 kreuzkorreliert, um vorhandene Beiträge zur Ebene n zu bestimmen, dargestellt in Fig. 3a,

2) die Ebene n wird mit der Ebene n+1 korreliert, um eine Zwischenebene n+½ zu generieren (nicht separat dargestellt), und

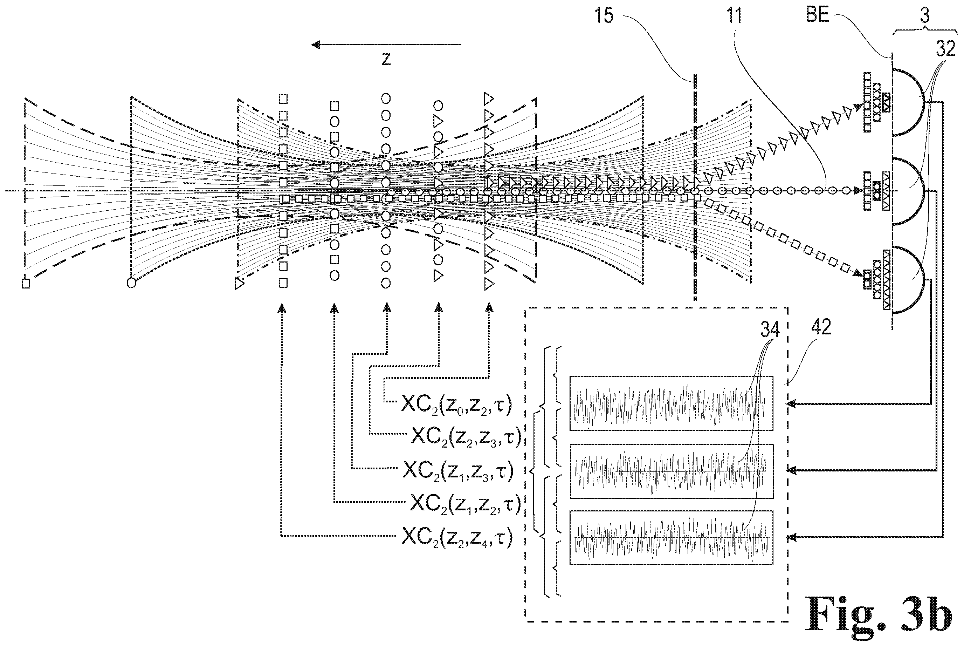

3) die Kreuzkorrelationen der Ebenen n+1 und n-1 sowie der Ebenen n und n+1 ergeben dann das Gesamtergebnis von Fig. 3b.

Allgemein formuliert:

$$XC_2\left(n_i, n_j, \tau\right) = A_{ij} \sum_{i,j} \left\langle \delta I\left(n_i, t+\tau\right) * \delta I\left(n_j, t\right) \right\rangle_t \qquad (2)$$

wobei XC die Kreuzkorrelation oder Kreuzkumulante, $n_i$ die Ebene i, $A_{ij}$ ein Gewichtungsfaktor ist.

Für i = j (entspricht Autokorrelation wie zu Fig. 2 erläutert) gilt wiederum, dass nur für $\tau \neq 0$ das Schrotrauschen unterdrückt wird, für i ≠ j gilt das auch für den Fall $\tau = 0$, da das Schrotrauschen benachbarter Ebenen/Detektorelemente unkorreliert ist, dementsprechend kann bei der Kreuzkorrelation auch oder sogar nur $\tau = 0$ ausgewertet werden, letzteres kann eine schnelle "online"-Berechnung der Pixelwerte (FPGA, im Prinzip auch analog-elektronisch) erleichtern.

Wie oben kann diese Korrelation für ein festes Timelag $\tau$ oder für viele $\tau$ erfolgen, als Pixelinformation wird wiederum die Korrelationsamplitude oder die Summe der Korrelationsamplituden ausgegeben. Das so entstehende Bild zeigt also nicht die Fluoreszenzmarkierung der Probe direkt, sondern ihre ortsaufgelöste Helligkeit sowie die Korrelationsstärke der Emitter in der Probe.

Bei der Kreuzkorrelation über die Ebenen muss noch eine Gewichtung der Beiträge aus den Ebenen erfolgen. Für den hier bevorzugten Fall, dass äquidistante Ebenen korreliert werden, erfolgt die Gewichtung einfach über die Abstandsverhältnisse, also für den hier weiter bevorzugten Fall benachbarter Ebenen vereinfacht sich der Gewichtungsfaktor zu ½.

Der Nutzen der Erfindung liegt in einer deutlich höheren Photoneneffizienz (= Verhältnis aus detektierten Fluoreszenzphotonen / eingestrahlten Photonen) und damit einhergehend reduzierten Aufnahmezeiten für gegebene 3D-Volumina sowie reduzierter Fotoschädigung bzw. reduziertem Bleichen.

Bei der 3D-Aufnahme der Fluoreszenz kommen zu dem erfindungsgemäß realisierten z-Linien-Scan Abtastschritte in lateraler Richtung hinzu, die vorzugsweise im kartesischen Raster der zwei Koordinatenrichtungen x und y ausgeführt werden. Bei der lateralen Abtastung in einem rechteckigen x-y-Raster wird in jeder Scanposition der erfindungsgemäße z-Linienscan ausgeführt, sodass sich bei einer geordneten Ablage der lateralen Scanschritte mit den dazugehörigen Fokalebenen-Aufnahmen in z-Richtung ein 3D-Stapel von Pixeldaten von in z-Richtung übereinander liegenden (x, y)-Frames ergibt. Der Begriff "Frame" steht hier also für die übliche kartesische 2D-Pixelkonfiguration bei (lateraler) x-y-Abtastung. Ein solches Frame wird bei der multi-(kon)fokalen 3D-Abtastung als Pixelfeld simultan für jede einzelne Fokalebene FE in n Ebenen erfasst und als Stapel (auch "Stack" genannt) gespeichert.

Erweiterung auf Detektoren mit Subpixelstruktur

Bislang wurden Detektoren 3 als Arrays von Detektoren betrachtet, wovon jeweils ein Detektorbereich 31 normalerweise als ein einzelnes Sensorelement aufgefasst wird und einer Fokalebene FE zugeordnet ist. I

Im Fall von schnellen Detektorarrays mit vielen Pixeln oder schnellen Kamerasystemen ist es aber auch möglich, jeder Fokalebene FE einen Bereich des Detektorarrays mit mehreren Pixeln zuzuordnen. Die Signale dieser Pixel aus dem Detektorbereich 31 des Arrays, der einer Fokalebene FE zugeordnet ist, können aufsummiert werden, sodass sich der Detektorbereich 31 wie ein Punktdetektor verhält und alle bisherigen Betrachtungen analog gelten. Dieser Fall ist in Fig. 3c dargestellt, wobei die Auswertung grundsätzlich in gleicher Art und Weise wie in Fig. 3b erfolgt und nur danach zu unterscheiden ist, ob die Detektorarrays 33 zusammengefasst, gemittelt oder als einzelne Pixel weiter verarbeitet werden.

Stehen ausreichend viele Pixel je Fokalebene FE zur Verfügung, kann die PSF jeder Fokalebene FE auch lateral aufgelöst werden. Wie bislang müssen die Beiträge der unterschiedlichen Fokalebenen FE durch Korrelation (XC oder AC) getrennt werden. Danach kann aber auch die zusätzliche Information der lateralen Intensitätsverteilung in jeder Fokalebene FE ausgenutzt werden. Dies kann durch lokale Entfaltung oder durch lokale modellbasierte Anpassung einer lokalen Fluoreszenzverteilung an die gemessene 3D-Intensitätsverteilung erfolgen, wobei "gemessen" hier die bereits, wie vorangehend beschrieben, durch Korrelation zugeordneten Detektorsignale bedeuten soll.

Die Signalqualität und Auflösung des lateralen Detektorsignals je Fokalebene kann durch laterale Kreuzkorrelation der Pixel innerhalb einer Fokalebene FE noch zusätzlich erhöht werden.

Bisher wurde stets von einer Korrelation zweiter Ordnung ausgegangen. Bei Korrelationen höherer Ordnung treten Mischterme niedriger Ordnung auf. Diese sind bei Messungen, bei denen die zentralen Momente ermittelt werden sollen, unerwünscht. Kumulanten werden dementsprechend so definiert, dass für eine Kumulante bestimmter Ordnung die Beiträge der Momente niedrigerer Ordnung verschwinden, siehe z.B. Biman Das and Nicolas Lyga, "Cumulant-like cross-correlation functions to determine temporal behavior of two signals", Bulgarian Journal of Physics 28, 3/4 (2001), 120-127. Für die für die vorliegende Erfindung insbesondere wichtige 2. Ordnung sowie auch die 3. Ordnung ist die Kumulante mit der Korrelationsfunktion identisch, wichtig wird diese Unterscheidung erst für höhere Ordnungen.

Fig. 4 zeigt das Ergebnis einer Simulation gemäß dem zu Fig. 1 beschriebenen Verfahren. Zu erkennen ist, dass die Fluoreszenzsignale 34 einer angenommenen Struktur mit 4 Punkten in der x-z-Ebene) mit dem hier vorgestellten Verfahren auf die entsprechenden Fokalebenen FE zurückgeführt werden können. Vier stochastisch fluktuierende Emitter, deren Lage in der Teilabbildung 4a) als schematisch räumliche Struktur 52 in einer x-z-Ebene der Probe 5 dargestellt ist, wurden unter simultaner Beobachtung mit 15 z-Ebenen (unterschiedliche Fokalebenen FE) simuliert. Die simulierten Daten bestehen aus einer Zeitserie von 100 Frames, die Triplett-Lebensdauer beträgt zwei Frames. In der Fig. 4b sind die Fluoreszenzsignale 34 aller Detektorbereiche 31 ihrem jeweiligen Ort in z zugeordnet, jedoch durch Übersprechen von Fluoreszenzlicht aus unscharf abgebildeten Fokalebenen FE derart überlagert, dass deren Trennung zur Separierung der 4er-Struktur 52 nicht möglich ist. Die rechte Darstellung Fig. 4c zeigt dann die Fluoreszenzsignale 34 aus einer Kreuzkorrelation 2. Ordnung der z-Ebenen. Die Korrelationen werden dabei nur zwischen verschiedenen z-Ebenen gebildet, jedoch nicht in lateraler Richtung. Somit werden nur die Signale von Beugungsordnungen BO eines Abtastpunktes im Raster der x-z-Ebene korreliert und hierbei jeweils die Fluoreszenzsignale 34 von allen Detektorbereichen 31, die zwei zueinander benachbarten Beugungsordnungen zugeordnet sind, verwendet.

Im gezeigten Fall von Fig. 4c resultiert daraus nicht nur die angestrebte Separierung von 15 z-Ebenen, sondern auch eine Auflösungssteigerung in z-Richtung (auch effektive Zwischenpixel in z). Man erkennt auch den positiven Effekt der Signalzuordnung an einer vermeintlich gesteigerten lateralen Auflösung: die beiden nebeneinander liegenden Punkte der Struktur 52 lassen sich nun trennen, aber nicht, weil sich das laterale Auflösungsvermögen des Mikroskops gesteigert hätte, sondern weil das Fluoreszenzsignal 34 dieser beiden Punkte nicht mehr von den außerfokalen Beiträgen der anderen beiden übereinander liegenden Punkte überlagert wird. Hier sei nochmals explizit darauf hingewiesen, dass die Korrelationen an jeweils einem x-z-Scanpunkt ausschließlich zwischen verschiedenen z-Ebenen (d.h. Beugungsordnungen BO auf verschiedenen Detektorbereichen 31) in die Berechnung einbezogen wurden. Man kann das Verfahren dahingehend erweitern, dass die (De)Korrelationen sowohl in z- als auch in x- und y-Richtung ausgewertet werden.

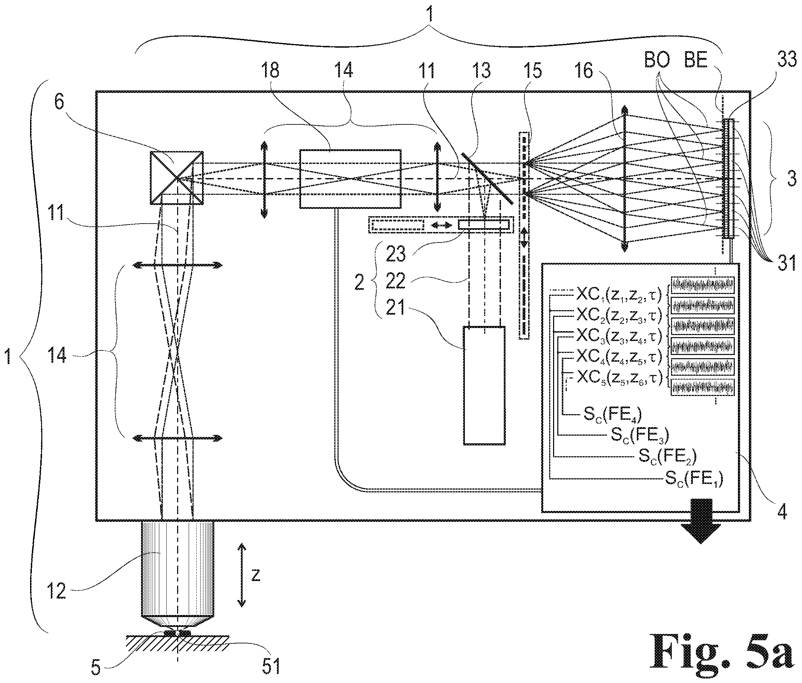

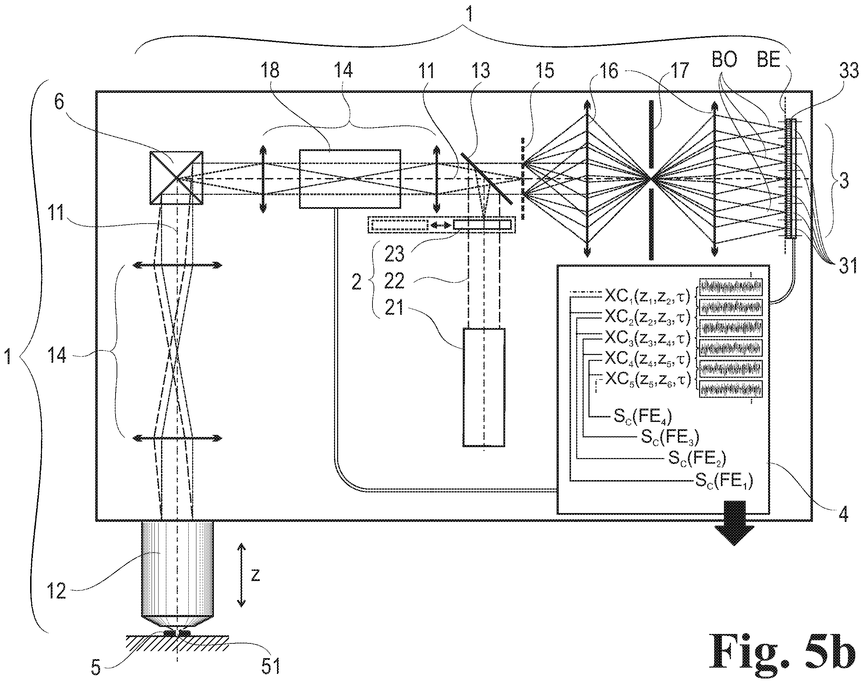

Fig. 5a und Fig. 5b zeigen die Realisierung des erfindungsgemäßen Verfahrens in einem typischen LSM-Aufbau.

Dabei wird in Fig. 5a eine diffraktive Optik 15, z.B. in Form eines optischen Gitters, zur Erzeugung von fünf unterschiedlichen Beugungsordnungen BO angenommen. Zu diesem Zweck ist ein Beleuchtungssystem 2 mit einem Laser 21 mit simultaner Anregung und Detektion der Fluoreszenz auf eine Probe 5 gerichtet, die eine solche Dicke aufweist, sodass für ein normales CLSM (konfokales LSM) ein Tiefenscan in z- Richtung notwendig wäre. Die Erfindung macht davon keinen Gebrauch. Hier wird die Auflösung in der Tiefe (z-Richtung) durch Anregung der Fluoreszenz mittels einer elongierten PSF sowie einer Separierung der Emitterorte.

Dazu weist das Beleuchtungssystem 2 einen Laser 21 zur Erzeugung mindestens eines Beleuchtungsstrahls 22 auf, der mittels eines Strahlvereinigers 13 in einen mikroskopischen Beobachtungsstrahlengang 1, der von einem Messvolumen 51 der Probe 5 bis zu einer Bildebene BE definiert ist und entlang einer optischen Achse 11 ein Mikroskopobjektiv 12, den Strahlvereiniger 13 und eine in der Bildebene BE angeordnete Detektoreinheit 3 umfasst, eingekoppelt wird und im CLSM folgende Schrittfolge ermöglicht:

- Fokussieren des Beleuchtungsstrahls 22 mit dem Mikroskopobjektiv 12 ins Messvolumen 51, wobei der Beleuchtungsstrahl 22 in einer Beleuchtungspupille eine strahlformende Phasenmaske 23 zur Erzeugung eines langgestreckten Fokus durchläuft,

- Sammeln und Kollimieren von im Messvolumen 51 erzeugtem Fluoreszenzlicht mittels des Mikroskopobjektivs 12 und Weiterleiten von resultierenden Lichtstrahlen auf eine zwischen Strahlvereiniger 13 und Bildebene BE angeordnete diffraktive Optik 15,

- Aufspalten der im Messvolumen 51 erzeugten Lichtstrahlen in Strahlenbündel unterschiedlicher Beugungsordnungen BO mittels der diffraktiven Optik 15 und Abbilden der unterschiedlichen Beugungsordnungen BO mittels einer Detektionsoptik 8 auf separate Detektorbereiche 31 des Detektorarrays 3, wobei die diffraktive Optik 15 den Lichtstrahlen jeder Beugungsordnung BO eine zu den anderen Beugungsordnungen BO unterschiedliche sphärische Phase aufprägt, sodass Fluoreszenzlicht aus verschieden tiefen Fokalebenen FE des Messvolumens 51 unterschiedlichen Beugungsordnungen BO zugeordnet und ohne konfokale Diskriminierung auf die separaten Detektorbereiche 31 abgelenkt wird, von denen Fluoreszenzlicht aus zugeordneten Fokalebenen FE des Messvolumens 51 sowie ein Fluoreszenz-Übersprechen aus unscharf abgebildeten benachbarten Fokalebenen FE des Messvolumens 51 in elektronische Fluoreszenzsignale 34 gewandelt werden,

- Zuordnen der Fluoreszenzsignale 34, die aus unterschiedlichen Fokalebenen FE des Messvolumens 51 stammen und längs der Beugungsordnungen BO durch das Übersprechen überlagert sind, zu im Messvolumen 51 definierten Fokalebenen FE mittels korrelationsbasierter Zuordnung der Fluoreszenzsignale 34 auf Basis unterscheidbaren Blinkverhaltens von fluoreszierenden Farbstoffen im Messvolumen 51, wodurch eine erhöhte Photoneneffizienz je festgelegter Fokalebene FE realisierbar ist.

Das Verfahren hat nicht primär die Generierung einer superaufgelösten Abbildung zum Ziel, sondern die Trennung bzw. Zuordnung von Fluoreszenzsignalen verschiedener im Raum (i.e. in der Tiefe des Probenvolumens) angeordneter fluoreszierender Emitter, die sich bei einem multifokalen LSM infolge einer bewusst nicht streng konfokal diskriminierte Signaldetektion multifokal überlagern, durch nachträgliche Pixelkorrelationen zur Steigerung der Photoneneffizienz zu nutzen. Deshalb soll dieses Verfahren kurz mit CPI - correlated pixel imaging - bezeichnet. Der Hintergrund, warum dieser CPI-Lösungsansatz überhaupt funktioniert, wird im nachfolgenden Abschnitt eingehend erläutert.

Zur Verdeutlichung der Parallelisierung der Auswertung der multikonfokalen Signale seien einige Zeitskalen betrachtet.

50 Zyklen ("Frames") zur Korrelationsanalyse bei 1 μs Framezeit ermöglichen es, bspw. 25 Pixelebenen simultan in 50 μs zu erfassen und entsprechend einen Stack mit 25*256*256 Pixeln in etwa 3 s. Dies entspräche 25 "normalen" LSM-Scans mit je 0,12 s, wobei aber bei der korrelationsgestützten multikonfokalen Fluoreszenzrastermikroskopie eine erhöhte Photoneneffizienz erreicht wird bzw. für ein gleich großes SNR weniger Leistung erforderlich ist.

Diese Beispielbetrachtung vernachlässigt jedoch außerdem noch die gemäß "normalen" LSM-Scans notwendigen Piezostellzeiten von ca. 100 ms pro z-Ebene bei der sequenziellen Messung, was demnach bei der erfindungsgemäßen multikonfokalen Detektion zu einem zusätzlichen Zeitgewinn von 2,5 s für den 25er Frame-Stack führt. Der große Vorteil der Erfindung ist daher die Gleichzeitigkeit der Messung in der Tiefe sowie die verbesserte Photoneneffizienz, insbesondere zur Darstellung von Dynamiken bei der Lebendzellbildgebung.

Beeinflussung der Lebensdauer von Dunkelzuständen

Die Lebensdauer der Triplett- und anderer Dunkelzustände hängt von vielen Faktoren ab und lässt sich auch durch das Ändern der chemischen Umgebung beeinflussen. Im Gegensatz zum bekannten Stand der Technik (vgl. z.B. S. Geissbuehler et al.: "Comparison between SOFI and STORM", in: Biomed. Opt. Express 2 (2011) 408-420 oder Dertinger et al.: "Superresolution optical fluctuation imaging with organic dyes", Angewandte Chemie 122 49 (2010) 9631-9633), bei dem die Dunkelzustände verlängert werden, um die Fluktuationen in das durch Kameras erfassbare Zeitregime zu schieben, ist es für die Erfindung sogar nützlich, die Fluktuationen zu verkürzen, um bei ausreichenden Korrelationsintervallen die Pixelverweilzeiten möglichst kurz zu halten. Dies erweitert zum einen das Applikationsspektrum, da - wie oben ausgeführt - die Triplett-Lebensdauern der meisten gängigen Farbstoffe ohnehin im Bereich einiger μs liegen; darüber hinaus lassen sich diese aber auch noch verkürzen (vgl. Zheng, Qinsi, et al. "On the mechanisms of cyanine fluorophore photostabilization", in: The Journal of Physical Chemistry Letters 3 16 (2012) 2200-2203). In dieser Veröffentlichung wird u.a. gezeigt, dass typische Antifade-Reagenzien wie Trolox die Triplett-Lebensdauer von z.B. Cy5 von ≈ 60 μs auf 1 μs reduzieren. Damit gewinnt das hier erfindungsgemäße Verfahren doppelt: erstens lässt sich die Bildaufnahmezeit verringern, zweitens wird das Photobleichen noch zusätzlich reduziert.

Einstellen EDOF (Extended Depth of Focus) gegen erhöhte Auflösung in z

Das vorgestellte Verfahren hat das Potenzial, die Auflösung in z-Richtung zu erhöhen. Hauptzweck ist hier aber die Trennung der parallel aufgenommenen z-Ebenen. Dennoch lassen sich die beiden Effekte auch je nach Anforderung einstellen. So kann z.B. bei gegebener Anzahl von Detektorbereichen 31 unter Verzicht auf echte Auflösungssteigerung (im Sinne beugungsbegrenzter Abbildung) in z-Richtung eine PSF mit verlängertem Fokus (unterfüllte Pupille oder EDOF) eingesetzt werden, um die simultan in einem Scan erfasste Probentiefe zu erhöhen. Das notwendige Spreizen der Fokalebenenaufspaltung wird mittels einer Zoomoptik 18 zwischen dem Scanner 6 und der beispielsweise als gechirpte Gitter ausgebildeten diffraktiven Optik 15 erreicht. Alternativ lässt sich auch das Gitter der diffraktiven Optik 15 auswechseln. Werden im Zusammenwirken mit dem Scanner 6 zwei (unterschiedliche) Relayoptiken 14 benutzt, so kann die Relayoptik 14, die zwischen dem Scanner 6 und der diffraktiven Optik 15 angeordnet ist, auch die Funktion der Zoomoptik 18 mit übernehmen.

Laterale Auflösungssteigerung

Je nach Anzahl und Dichte der Detektorbereiche 31 bzw. der Größe eines Detektorarrays 33 (Pixelzahl) kann auch eine laterale Auflösungssteigerung durch Fluktuationsanalyse erfolgen (durch schnelle Detektoren für jeden Farbstoff. Diese Eigenschaft kann wiederum für die Optimierung einer schnellen und probenschonenden 3D-Abbildung ausgenutzt werden: Wird beispielsweise die parallele Erfassung eines möglichst großen z-Bereichs angestrebt, würde eine möglichst "lange" Beleuchtungs-PSF ausgewählt. Wird letztere durch Unterfüllen der Objektivpupille realisiert, ergibt sich eine Verringerung der lateralen Auflösung. Diese kann aber durch die laterale Korrelation der Signale auf eine Auflösung gerechnet werden, die einem kleineren Fokus entspräche.

Kombination des Verfahrens mit numerischer Entfaltung

Das Verfahren gemäß der Erfindung führt, wie oben beschrieben, inhärent zu einer Art Entfaltung. Allerdings ist auch eine Nachbearbeitung der Daten mit einem der bekannten Verfahren denkbar. Gerade dadurch, dass in z-Richtung benachbarte Ebenen mit dem erfindungsgemäßen Verfahren aufgenommen werden, können die Daten für eine numerische Entfaltung vorteilhaft erzeugt werden. Darüber hinaus ergibt sich bei Messung mehrerer lateraler Pixel pro Fokalebene FE durch die Verwendung einer Entfaltung die Möglichkeit, den Schritt der Dekorrelation wegzulassen und mit einer (evtl. zuvor gemessenen) PSF die Daten direkt zu entfalten. Zur optimalen Nutzung des Verfahrens sollte das optische Gesamtsystem des Beobachtungsstrahlengangs 1 entsprechend ausgelegt werden. Eine der diffraktiven Optik 15 nachgeordnete, geeignete Detektionsoptik 16 ist so ausgebildet, dass diese alle aufgespalteten Beugungsordnungen BO in die Öffnung einer in herkömmlichen CLSM vor dem Empfänger liegenden Konfokalblende 17 (nur in Fig. 5b vorhanden) fokussiert. Diese ist für das erfindungsgemäße Verfahren weit geöffnet. Dadurch werden alle Strahlenbündel der verschiedenen Beugungsordnungen BO auf derart beabstandet hinter der Blende angeordnete Detektorbereiche 31 gelenkt, dass die Strahlenbündel mindestens um eine der Entfernung zwischen den einzelnen Detektorbereichen 31 entsprechende Distanz auseinandergelaufen sind, bis sie auf die Detektoreinheit 3 treffen. Alternativ können die Detektorbereiche 31 in einer weiteren konjugierten Bildebene angeordnet sein.

Trennung von Farbstoffen anhand der Dekorrelationszeiten

Da Dekorrelationszeiten farbstoffspezifisch sind, kann anhand der Blinkstatistik der Fluoreszenz auch auf die Spezies des Emitters zurückgeschlossen werden. Damit wären Mehrkanalabbildungen mit einem Detektor und ohne Farbteilung im Detektionspfad möglich, oder aber die Kombination aus beiden Verfahren (klassische Farbtrennung über Filter und zusätzlich Farbtrennung über Dekorrelationszeiten). Damit lässt sich über entsprechende Kombinatorik die Anzahl der eingesetzten und simultan zu messenden Farbstoffe erhöhen; so könnten z.B. Farbstoffe mit überlappenden Emissionsspektren gleichzeitig eingesetzt werden, wenn sich ihre Dekorrelationszeiten deutlich unterscheiden. Damit ist eine weitere Parallelisierung der Fluoreszenzauswertung möglich, die jetzt zur spektralen Analyse genutzt werden kann.
Ähnlich wie bei der Trennung der Farbstoffe anhand ihrer spektralen Eigenschaften, besteht die Möglichkeit von Crosstalk unter den Farbkanälen. Dieser ist nicht verursacht durch eine Überlappung der Emissionsspektren, sondern durch den Überlapp der Konfidenzintervalle.

Vorrichtung zur Durchführung des Verfahrens

In Fig. 5 ist der Strahlengang eines multikonfokalen LSM schematisch dargestellt. Laserlicht wird vom Laser 21 kollimiert entlang des Beleuchtungsstrahlenganges 2 geführt und am Strahlvereiniger 13, der als dichroitischen Strahlteiler ausgebildet sein kann, in Richtung der Probe 5 abgelenkt. Der Scanner 6 (vorzugsweise Galvo oder MEMS) rastert mit einem Beleuchtungsstrahl 22 vom Laser 21 lateral die Probe 5 ab. Das Mikroskopobjektiv 12 erzeugt den Beleuchtungsfokus, der über die im Beobachtungsstrahlengang 1 vor und nach dem Scanner 6 angeordneten Relayoptiken 14, die Objektivpupille in die Ebene der Scanspiegel des Scanners 6 bzw. in die Detektions- bzw. Beleuchtungspupillen abbildet. In der Beleuchtungspupille ist eine Phasenmaske 23 eingebracht, die einen elongierten Fokus in der Probentiefe (z-Richtung) erzeugt. Die Phasenmaske 23 kann eine kubische Phasenmaske sein. Alternativ kann dort auch eine Ringblende zur Erzeugung eines Besselstrahls oder eines anderen nicht-diffraktiven Strahls (bisweilen auch als selbst-rekonstruierender Strahl bezeichnet) eingebracht werden.

Des Weiteren kann anstelle der Phasenmaske 23 der Strahlradius durch eine Zoomoptik 18 im Beleuchtungsstrahl 2 einstellbar sein, sodass durch Unterfüllen der Pupille des Mikroskopobjektivs 12 ein elongierter Fokus erzeugt wird. Die entlang des Fokus erzeugte Fluoreszenz wird durch das Mikroskopobjektiv 12 eingesammelt und durchläuft den Beobachtungsstrahlengang 1 in entgegengesetzter Richtung. Im Strahlvereiniger 13 wird die Fluoreszenzstrahlung durch dichroitische Strahlteilung transmittiert. In der Detektionspupille ist als diffraktive Optik 15 ein zweidimensionales gechirptes Gitter eingebracht, das jeder Beugungsordnung BO einen konstanten Defokus aufprägt. Die Detektionsoptik 16 bildet jede Beugungsordnung BO auf einen eigenen Detektionsbereich 31 des Detektorarrays 33 ab. Jedem Detektorbereich 31 ist somit eine andere Fokalebene FE im Messvolumen 51 der Probe 5 zugeordnet, die in der Bildebene BE scharf auf die Detektorbereiche 31 abgebildet wird.

Der Abstand der betrachteten Fokalebenen FE ist durch die Zoomoptik 18 einstellbar und wird durch die Auswerte- und Steuereinheit 4 kontrolliert. Die Signaldaten werden vom Detektorarray 33 in die Auswerte- und Steuereinheit 4 übertragen und dort per Korrelationsanalyse und/oder 3D-Entfaltung gemäß der oben angegebenen Beschreibung ausgewertet. Dabei werden die defokussierten Signalanteile aufgrund ihres korrelierten Blinkverhaltens ihrer Ursprungsebene im Messvolumen 51 zugeordnet. Die dadurch nicht auftretende Ausblendung von durch konfokale Diskriminierung defokussierten Signalanteilen führt zur erfindungsgemäßen Steigerung der Photoneneffizienz.

Soweit das erfindungsgemäße Verfahren mit einem herkömmlichen konfokalen Laser-Scanning-Mikroskops (CLSM)- wie in Fig. 5b dargestellt - durchgeführt wird, ist nach dem als Farbteiler ausgeführten Strahlvereiniger 13 in Richtung des Detektors 3 eine Detektorblende 17 vorhanden, die als Pinhole in einem CLSM den konfokalen Diskriminator darstellt. Diese Detektorblende 17, die in einer Zwischenbildebene zwischen zwei als Relay-Optiken ausgeführten Detektoroptiken 16 angeordnet ist, dient hier allerdings - in einem weit geöffneten Zustand - lediglich der groben Streulichtdiskriminierung.

Die Empfindlichkeit einer in Fig. 5b gezeigten Messapparatur in Form des CLSM hängt nicht nur von den Helligkeiten der verwendeten Farbstoffe ab, sondern auch von der Geschwindigkeit des lateralen Scans, die - aufgrund des zeitlichen Verhaltens der Blink-Statistik (On-Off-Zeitskala) der Farbstoffe - eine Funktion der Dekorrelationszeiten des betrachteten Farbstoffes sein sollte.

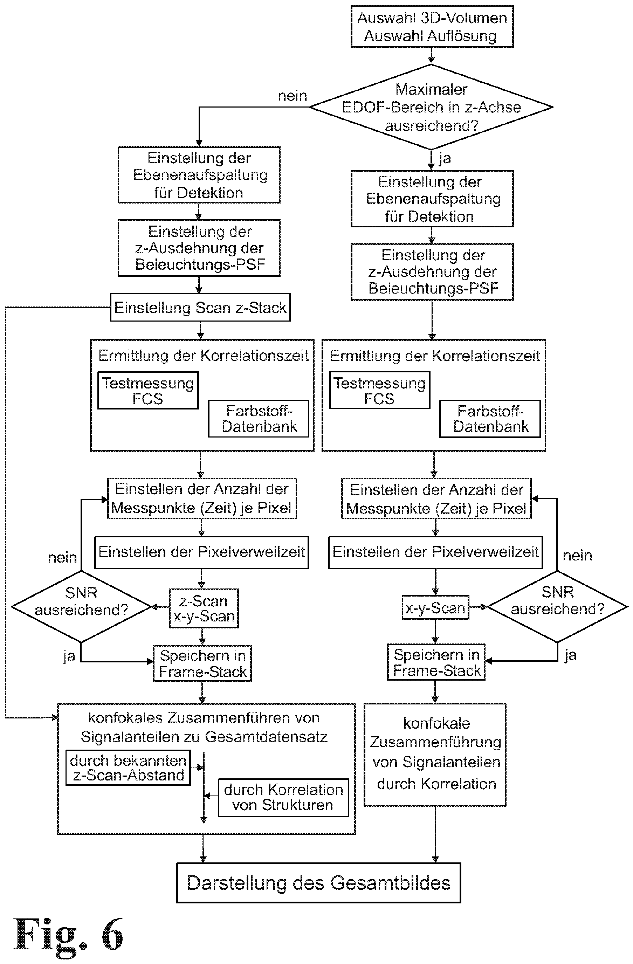

Es kann deshalb von Vorteil sein, die Geschwindigkeit des Scans adaptiv während der Bildaufnahme anzupassen, wie es im Ablaufschema von Fig. 6 zu erkennen ist. In Abhängigkeit von der Qualität der aufgenommenen Daten wird dabei die Geschwindigkeit der x- und y-Scanner 6 an die Probe 5 angepasst. Die Triplett-Lebensdauer (oder allgemeiner: die charakteristische Blink-Zeit) des Farbstoffsystems bestimmt die Geschwindigkeit. Bei längerer Triplett-Zeit und/oder schlechtem SNR müsste langsamer gescannt werden, um durch längere Pixelverweilzeit ausreichend viele Korrelationszyklen zu erfassen. Dafür sind folgende Überlegungen maßgebend.

Erste Abschätzung:

Für eine Triplett-Zeit $\tau$ = 3 $\mu$s werden bei einer Pixelverweilzeit von 150 $\mu$s 50 Messpunkte von der Blinkzeit als notwendige Anzahl von "Korrelationspunkten" erfasst. Beträgt die Triplett-Zeit jedoch $\tau$ = 10 $\mu$s, sind für die gleichen 50 Messpunkte 500 $\mu$s Pixelverweilzeit erforderlich.

Zweite Abschätzung:

Die Qualität eines Korrelationssignals aus 10 Messpunkten reicht für eine zuverlässige Korrelation der Fluoreszenzsignale 34 der Detektorbereiche 31 nicht aus, es sind mindestens 20 Messpunkte des Triplett-Blinkens erforderlich. Die Geschwindigkeit der Scanner 6 muss deshalb verringert werden; d.h. der x-/y- Scan kann nur noch halb so schnell erfolgen.

Zur Einstellung der Scangeschwindigkeit erfolgt zweckmäßig eine FCS-Messung an einem Spot entweder vor der Bildaufnahme oder zusammen mit der Abbildung eines kleinen Bereiches zur Ermittlung der Parameter für einen Stack von Frames. Diese Testmessung ist ebenfalls dem Ablaufschema von Fig. 6 entnehmbar.

Für die flexible Einstellung der z-Auflösung gegenüber der Aufspreizung der Ebenen der parallelisierten z-Abtastung ist eine getrennte Einstellbarkeit von Beleuchtungs-PSF-Länge und Detektionsebenen-z-Abstand sinnvoll.

Dabei gelten für den Beleuchtungsstrahl 22 folgende Einstellparameter und -alternativen:

- Einphotonen- oder Mehrphotonenanregung,
- Gauß-Profil, Unterfüllung der Pupille (einstellbar durch strahlformendes Element, z.B. Phasenmaske 23 oder Maske zur Amplitudenapodisierung (auch mit Wechseleinrichtung möglich) vor dem Strahlvereiniger 13 (in einem kommerziellen CLSM meist Hauptfarbteiler),
- Erzeugung einer EDOF-PSF mittels eines Besselstrahls (oder vergleichbar wirkenden nicht-diffraktiven Strahls) DOF einstellbar durch adaptive Optik (z.B. Zoomoptik 18 oder eine Relayoptik 14) nach dem Strahlvereiniger 13,
- Einstellung der Laserintensitäten für ein optimales Blinkverhalten (das Blinken hängt u.U. stark von der Intensität ab),

Die Multispotaufspaltung in z-Richtung kann wie folgt positiv beeinflusst werden:

- Durch eine außerhalb des Beobachtungsstrahlengangs 1 vor dem Strahlvereinigereingang zur Ankopplung des Beleuchtungssystems 2 angeordnete Optik wird nur die Ausdehnung des Beleuchtungsvolumens, d.h. die (objektseitige) Fokustiefe (Fokusausdehnung) des Mikroskopobjektivs 12 verlängert, nicht aber das an verschiedenen Stellen des Beleuchtungsvolumens liegende Messvolumen 51 beeinflusst. Dadurch wird zwar das axiale Auflösungsvermögen verringert, durch die auf diese Weise erweiterte Fokustiefe (engl. "elongated depth of field"; EDOF) des Beleuchtungsvolumens werden jedoch mehr Messvolumina simultan mit identischer Lichtleistung angeregt.
- Die Optik zum Erzeugen einer erweiterten Fokustiefe ist eine Phasenplatte 23, insbesondere eine kubische Phasenmodulationsmaske oder ein Mittel zum Erzeugen von Besselstrahlen, jeweils angeordnet in einer zur Pupillenebene des Mikroskopobjektivs konjugierten Ebene, oder ist zum Unterfüllen der Pupille des Mikroskopobjektivs ausgebildet, insbesondere durch Strahlformung zum Verringern eines Strahlquerschnitts von kollimiertem Licht. Kubische Phasenmodulationsmasken zum Erzeugen einer erweiterten Fokustiefe sind bspw. in: "Extended depth of field through wave-front coding" (Dowski/Cathey in "Applied Optics", Band 34, Nr. 11, S. 1859) beschrieben. Eine Optik zum Unterfüllen der Pupille kann beispielsweise ein den Strahlquerschnitt in der Pupille verringernder Strahlformer sein. Die Unterfüllung der Pupille führt zur Verringerung der numerischen Apertur der Beleuchtung, woraus sich ein verschlechtertes axiales Auflösungsvermögen $\Delta z$ ergibt.
- Zum Erzeugen eines axial verlängerten Beleuchtungsvolumens kann auch jede andere bekannte EDOF-artige Optik verwendet werden, um Besselstrahlen zu erzeugen, wie in "Experimental investigation of Bessel beam characteristics" (Y. Lin in "Applied Optics", Band 31, S. 2708) oder dem Beleuchtungslicht einen kubischen Phasenverlauf aufzuprägen, wie ebenfalls in "Applied Optics", Band 34, Nr. 11, S. 1859) beschrieben. Weiterhin kann eine Lichtquelle oder eine der Lichtquelle nachgeschaltete Optik vorteilhaft sein, die eine den Messvolumina 51 entsprechende Punktreihe axial aufspannt, beispielsweise wie in DE 103 56 416 A1 mit Bezugszeichen 11 beschrieben. Der Vorteil liegt in der besseren Auflösung in jeder axialen Fokusebene FE, weil hier jeweils eine volle Konfokalität erzielt werden kann (der Nachteil ist eine ausgedehntere Beleuchtung der Probe 5 mit entsprechend höherer Belastung),
- Die Zoomoptik 18 zum Erweitern der Fokustiefe (elongierter Fokus) erzeugt ein Beleuchtungsvolumen, dessen axiale Ausdehnung ein wenigstens Vierfaches, insbesondere über Zehnfaches, vorzugsweise mindestens Zwanzigfaches, seiner lateralen Ausdehnung beträgt, und/oder für eine vorgegebene Anregungswellenlänge, eine vorgegebene numerische Apertur des Mikroskopobjektivs 12, eine vorgegebene konfokale Blendenöffnungsgröße und einen vorgegebenen Brechungsindex eines Immersionsmediums mindestens zwei optischen Schnittdicken des Mikroskops entspricht. Dadurch kann die diffraktive Optik 15 zur Bereitstellung eines gegenüber dem Stand der Technik zur optischen Trennung ausreichenden axialen Abstands ausgebildet sein.
- Vorzugsweise ist das optische Element zur Strahlformung der Beleuchtung (Phasenplatte 23 oder diffraktive Optik 15) derart ausgebildet, dass Mittelpunkte benachbarter axialer Messvolumina 51 für eine vorgegebene Anregungswellenlänge, eine vorgegebene numerische Apertur des Mikroskopobjektivs 12, eine vorgegebene Größe der konfokalen Blende 17 und einen vorgegebenen Brechungsindex eines Immersionsmediums mehr als zwei optische Schnittdicken des LSM voneinander entfernt sind. Allerdings kann durch entsprechende Ausgestaltung des diffraktiven Elements bei gegebenem Mikroskopobjektiv 12 eine gewünschte axiale Trennung der Messvolumina 51 durch Einstellung der axialen Aufspaltung mittels Gitterparameter der diffraktiven Optik 15 erzielt werden.
- Die Optik zum Vergrößern des elongierten Fokus wird vorteilhaft so ausgebildet, dass alle in die Bildebene BE abgebildeten Messvolumina 51 innerhalb des elongierten Fokus liegen, wenn also das Beleuchtungssystem 2 mit elongiertem Fokus (EDOF) in der Probe 5 an die durch die Detektion abgedeckten Bereiche (Messvolumina 51) angepasst ist. Auf diese Weise kann das Anregungslicht des Beleuchtungsstrahls 22 effizient genutzt werden, wodurch die Probe 5 geschont wird. Zu diesem Zweck kann entweder bei gegebenem Gitter der diffraktiven Optik 15 im Detektionsstrahlengang die Beleuchtungsoptik (Zoomoptik 18 oder Phasenmaske 23) im Beleuchtungsstrahlengang 2 so angepasst werden, dass die Messvolumina 51 vollständig ausgeleuchtet sind, oder bei gegebener Lichtverteilung in der Probe 5 im Detektionsstrahlengang die diffraktive Optik 15 so angepasst werden, dass die beleuchteten Bereiche vollständig abgebildet (und detektiert) werden.

Für den Bildaufbau ergeben sich folgende Optionen:

- Bildaufbau erfolgt über ein laterales Abrastern (optional auch gekoppelt mit einem zusätzlichen mechanischen z-Scan, wobei durch den multi(kon)fokalen z-Scan - im Gegensatz zum klassischen LSM - beim erfindungsgemäßen Verfahren mit einem Lateral-Scan (x,y) bereits ein 3D-Probenvolumen abgebildet wird und lediglich der "z-Fangbereich" zusätzlich vergrößert werden kann, wenn noch ausgedehntere Messvolumina 51 der Probe 5 abgebildet werden müssen.
- Verwendung von Scanning-Technologien, wie Galvo-Scanner, MEMS-Scanner, Akusto-Optische Linse (AOL), Akusto-Optischer Modulator (AOM), EO-Scanner etc.).

Für die Detektion gibt es folgende Einstell- und Steuerungsvarianten:

- Das herkömmliche CLSM-Pinhole (als Detektorblende 17) kann mit den folgenden Betriebsmodi benutzt werden:

  • kleines Pinhole (schaltbar mit Durchmesser 0...10 AU) für die herkömmliche Standardkonfokaldetektion als Standard-CLSM,
  • großes Pinhole 17 für optimale Detektion bei Anwendung der beschriebenen Erfindung oder
  • kein Pinhole für eine durch Streulicht etwas verschlechterte Anwendung der Erfindung

- Die diffraktive Optik 15 kann wie folgt ausgeführt sein:

  • in Form eines dezentrierten einzelnen diffraktiven optischen Elements (Einzel-DOE),
  • in Form eines DOE-Wechslers,
  • fixes DOE mit vorgelagerter Vergrößerungsoptik (Zoomoptik 18 oder Optikwechsler)

- eine spektrale Aufnahme ist realisierbar (z.B. um unterschiedliche Blinkzyklen bei den Farbstoffen zu berücksichtigen, indem die längste Blinkzeit die"Pixelverweilzeit" bestimmt), wobei die Trennung der Blinkzyklen klassisch mittels spektraler Filter erfolgt.
- in der Detektoreinheit 3 können die folgenden Sensorarrays verwendet werden:

  • SPAD-Array (Single-Photon-Avalanche-Dioden-Array)
  • PMT-Array (Photomultiplier) ohne/mit Mittel zur Umverteilung der Intensitätsverteilung auf die Sensorgeometrie, z.B. Fasern, FOPS, CMOS-Kamera,
  • CMOS-Kamera mit Bildverstärker (z.B. Mikrokanalplatten - engl. als Multi-channel plate oder Micro-channel plate bezeichnet)
  • EMCCD (Electron-Multiplying CCD) mit geringer Pixelzahl für hohe Ausleserate)
  • sCMOS-Kamera.

Bei der Vielzahl der vorgenannten Variationsmöglichkeiten ist die notwendige Voraussetzung für die Durchführung des erfindungsgemäßen Verfahrens die multikonfokale Betriebsart eines CLSM mit Strahlaufspaltung mittels DOE, wie oben beschrieben, verknüpft mit einer numerischen Analyse/Verrechnung der Daten, durch die die defokussierten Signale ihrer Ursprungsebene zugewiesen werden, indem die Signaldaten mit einer numerische Methode einer Korrelationsanalyse (z.B. Kreuzkorrelation 2. Ordnung) oder einer 3D-Entfaltung verarbeitet werden.

Dazu zeigt Fig. 6 ein Flussdiagramm, bei dem im Ablauf die obigen Einstellmöglichkeiten Berücksichtigung finden. Insbesondere wird die unterschiedliche Anpassung der erhöhten Tiefenauflösung der Fokalebenen FE im Wechselspiel mit der Einstellung des erforderlichen Tiefenbereichs des mechanisch-optischen z-Scans durch die Einstellungsschritte der Ebenenaufspaltung für die Detektion, der z-Ausdehnung der Beleuchtungs-PSF und des mechanischoptischen z-Scans. Eine weitere wechselseitige Einstellmöglichkeit stellt die Ermittlung der Korrelationszeit dar, bei der zwischen möglichen Farbstoffen, dem Ergebnis einer FCS-Testmessung und den realen Blinkzeiten des Farbstoffs ein Optimum gesucht wird, um daraus die notwendige Pixelverweildauer einzustellen, damit eine ausreichender Framezyklus für die Korrelation zur Verfügung steht.

Des Weiteren besteht die Möglichkeit, den x-y-Scan (ggf. zusätzlich z-Scan) zu optimieren, um ein hinreichend gutes Signal-Rausch-Verhältnis (SNR) zu erhalten, bevor die korrelierte Zusammenführung der den einzelnen Fokalebenen FE (und ggf. Zwischenebenen) zugehörigen Signalanteilen erfolgt und in geordneten Stacks gespeicherter Frames als konfokales 3D-Ergebnisbild gespeichert oder zur Anzeige gebracht wird.

Das Verfahren kann zur weiteren Parallelisierung und somit weiteren Erhöhung des Probendurchsatzes mit mehreren Strahlenbündeln zur zusätzlichen lateralen Parallelisierung durchgeführt werden. Der Mehrstrahleinsatz bietet dabei den Vorteil, dass bei gegebener Bildwiederholrate eine umfangreichere Anpassung auf die Blinkstatistiken der Farbstoffe möglich ist.

Bezugszeichen

1    Beobachtungsstrahlengang
11    optische Achse
12    Mikroskopobjektiv
13    Strahlvereiniger

14    Relayoptik
15    diffraktive Optik
16    Detektionsoptik
17    Detektorblende (Pinhole)
18    Zoomobjektiv
2    Beleuchtungssystem
21    Laser
22    Beleuchtungsstrahl
23    Phasenmaske
3    Detektoreinheit
31    Detektorbereich
32    Einzeldetektor
33    Detektorarray
34    (elektronische) Fluoreszenzsignale
4    Auswerte- und Steuereinheit
41    Zuordnungseinheit
42    Kreuzkorrelator
5    Probe
51    Messvolumen
6    Scanner
BE    Bildebene
BO    Beugungsordnung
FE    Fokalebene

## Patentansprüche

1.  Verfahren zur Auswertung von Signalen der Fluoreszenzrastermikroskopie mit simultaner Anregung und Detektion der Fluoreszenz in verschiedenen Fokalebenen (FE) einer Probe (5) mittels konfokaler Laser-Scanning-Mikroskopie, mit den Schritten:

    - Einkoppeln mindestens eines Beleuchtungsstrahls (22) mittels eines Strahlvereinigers (13) in einen mikroskopischen Beobachtungsstrahlengang (1), der von einem Messvolumen (51) der Probe (5) bis zu einer Bildebene (BE) definiert ist und entlang einer optischen Achse (11) ein Mikroskopobjektiv (12), den Strahlvereiniger (13) zur Einkopplung des Beleuchtungsstrahls (22) und ein in der Bildebene (BE) angeordnetes Detektorarray (3) aufweist,
    - Fokussieren des Beleuchtungsstrahls (22) mit dem Mikroskopobjektiv (12) ins Messvolumen (51), wobei der Beleuchtungsstrahl (22) in einer Beleuchtungspupille eine Strahlformung zur Erzeugung eines langgestreckten Fokus erhält,
    - Sammeln und Kollimieren von im Messvolumen (51) erzeugtem Fluoreszenzlicht mittels des Mikroskopobjektivs (12) und Weiterleiten von resultierenden Lichtstrahlen auf eine zwischen Strahlvereiniger (13) und Bildebene (BE) angeordnete diffraktive Optik (15),
    - Aufspalten der im Messvolumen (51) erzeugten Lichtstrahlen in Strahlenbündel unterschiedlicher Beugungsordnungen (BO) mittels der diffraktiven Optik (15) und Abbilden der unterschiedlichen Beugungsordnungen (BO) mittels einer Detektionsoptik (8) auf separate Detektorbereiche (31) des Detektorarrays (3), wobei die diffraktive Optik (15) den Lichtstrahlen jeder Beugungsordnung (BO) eine zu den anderen Beugungsordnungen (BO) unterschiedliche sphärische Phase aufprägt, sodass Fluoreszenzlicht aus verschieden tiefen Fokalebenen (FE) des Messvolumens (51) unterschiedlichen Beugungsordnungen (BO) zugeordnet und ohne konfokale Diskriminierung auf die separaten Detektorbereiche (31) abgelenkt wird, von denen Fluoreszenzlicht aus zugeordneten Fokalebenen (FE) des Messvolumens (51) sowie ein Fluoreszenz-Übersprechen aus unscharf abgebildeten benachbarten Fokalebenen (FE) des Messvolumens (51) in elektronische Fluoreszenzsignale (32) gewandelt werden,
    - Zuordnen der Fluoreszenzsignale (32), die aus unterschiedlichen Fokalebenen (FE) des Messvolumens (51) stammen und längs der Beugungsordnungen (BO) durch das Übersprechen überlagert sind, zu im Messvolumen (51) definierten Fokalebenen (FE) mittels korrelationsbasierter Zuordnung der Fluoreszenzsignale (32) auf Basis unterscheidbaren Blinkverhaltens von fluoreszierenden Farbstoffen im Messvolumen (51).

2.  Verfahren nach Anspruch 1, **dadurch gekennzeichnet, dass** die Zuordnung der Fluoreszenzsignale zu den Fokalebenen (FE) durch Kreuzkorrelation 2. Ordnung von Signalfolgen zweier Detektorbereiche (31) benachbarter Beugungsordnungen (BO) erfolgt.

3. Verfahren nach Anspruch 2, **dadurch gekennzeichnet, dass** die Kreuzkorrelation der Signalfolgen über eine an das Fluoreszenzblinken der Farbstoffe angepasste Zeitdauer durchgeführt wird, wobei Farbstoffe verwendet werden mit einer Dauer eines Aus-Zustandes des Fluoreszenzblinkens vorzugsweise zwischen 0,1 $\mu$s und 500 $\mu$s, insbesondere zwischen 5 $\mu$s und 50 $\mu$s.

4. Verfahren nach Anspruch 3, **dadurch gekennzeichnet, dass** die Korrelation von Signalfolgen über eine Anzahl von Frames, die dem 10- bis 1000-fachen, vorzugsweise dem 20- bis 50-fachen, eines Aus-Zustandes des Fluoreszenzblinkens entspricht, durchgeführt wird.

5. Verfahren nach Anspruch 2, **dadurch gekennzeichnet, dass** zusätzlich zur Kreuzkorrelation eine 3D-Entfaltung durchgeführt wird.

6. Verfahren nach Anspruch 1, **dadurch gekennzeichnet, dass** das Messvolumen (51) mit elongiertem Fokus beleuchtet wird, um eine vorgegebene Anzahl der Fokalebenen (FE) in der Tiefe des Messvolumens (51) weiter aufzuspreizen.

7. Verfahren nach Anspruch 6, **dadurch gekennzeichnet, dass** sich die Aufspreizung der Fokalebenen (FE) und eine erhöhte Auflösung in der Tiefe des Messvolumens (51) wahlweise einstellen lassen, indem der elongierte Fokus mittels eines Zoomobjektivs (18) zwischen der Probe (5) und der diffraktiven Optik (15) eingestellt wird.

8. Verfahren nach Anspruch 6, **dadurch gekennzeichnet, dass** der elongierte Fokus durch Unterfüllen der Eingangspupille des Mikroskopobjektivs (12) eingestellt wird, wobei ergänzend zur Korrelation der Fluoreszenzsignale (34) in der Tiefe bei elongiertem Fokus optional eine zusätzliche Korrelation von in lateralen Ebenen der Probe abgetasteten Fluoreszenzsignalen mit erhöhter laterale Auflösung erreicht wird.

9. Verfahren nach Anspruch 1 oder 8, **dadurch gekennzeichnet, dass** ergänzend zur Korrelation in der Tiefe eine zusätzliche Korrelation für in lateralen Ebenen der Probe abgetastete Fluoreszenzsignale durchgeführt wird.

10. Konfokales Fluoreszenzrastermikroskop mit einem optischen System, das einen mikroskopischen Beobachtungsstrahlengang (1) von einem Messvolumen bis zu einer Bildebene (BE) definiert und ein Mikroskopobjektiv (12), einen Strahlvereiniger (13) zur Ankopplung eines Beleuchtungssystems (2), ein Detektorarray (3) und eine in der Bildebene (BE) angeordnete Blende (17) vor dem Detektorarray (3) aufweist, und einem Beleuchtungsstrahlengang, der das Beleuchtungssystem (2) mit einem Laser (21) und Mitteln (23) zur Erzeugung eines Beleuchtungsstrahls (22) mit einem elongierten Fokus enthält,
**dadurch gekennzeichnet, dass**

- das optische System im Beobachtungsstrahlengang (1) zwischen dem Strahlvereiniger (13) und der Bildebene (BE) eine diffraktive Optik (15) zur Aufspaltung von Lichtstrahlen in Strahlenbündel längs unterschiedlicher Beugungsordnungen (BO), wobei den Strahlenbündeln jeder Beugungsordnung (BO) eine von den anderen Beugungsordnungen (BO) verschiedene sphärische Phase aufgeprägt ist, und eine Detektionsoptik (16) zur Fokussierung der aufgespalteten Strahlenbündel auf separate Detektorbereiche (31) des Detektorarrays (3) umfasst,
- das Detektorarray (3) eine der Anzahl der Beugungsordnungen (BO) entsprechende Zahl von separat auslesbaren Detektorbereichen (31) aufweist, sodass in den Detektorbereichen (31) jeweils aus einer definierten Fokalebene (FE) in der zugeordneten Beugungsordnung (BO) ankommendes Fluoreszenzlicht sowie aus benachbarten Fokalebenen (FE) in dieselbe Beugungsordnung (BO) übersprechendes Fluoreszenzlicht aufnehmbar ist, und
- den Ausgängen der Detektorbereiche (31) eine Auswerte- und Steuereinheit (4) zur Zuordnung der aus gleichen Fokalebenen (FE) stammenden, aber von verschiedenen Detektorbereichen (31) empfangenen Fluoreszenzsignale (34) nachgeordnet ist, die Mittel zur Korrelation (41) von unterschiedlichen Signalanteilen und Zuordnung korrelierender Signalanteile zu jeweils genau einer Fokalebene (FE) auf Basis unterscheidbaren Blinkverhaltens von fluoreszierenden Farbstoffen im Messvolumen (51) enthält.

11. Vorrichtung nach Anspruch 10, **dadurch gekennzeichnet, dass** den Lichtstrahlen jeder Beugungsordnung (BO) durch die diffraktive Optik (15), die vorzugsweise ein gechirptes Gitter ist, eine um ein jeweils ganzzahliges Vielfaches von den anderen Beugungsordnungen (BO) verschiedene sphärische Phase aufgeprägt ist.

**12.** Vorrichtung nach Anspruch 10, **dadurch gekennzeichnet, dass** als Mittel zur Ausbildung eines elongierten Fokus der Laser (21) für die Anregung der Probe (5) Mittel zur Erzeugung eines Besselstrahls oder eines anderen nicht-diffraktiven Strahls vorhanden sind.

**13.** Vorrichtung nach Anspruch 10 oder 12, **dadurch gekennzeichnet, dass** als Mittel zur Ausbildung eines elongierten Fokus eine Zoomoptik (18) zur Unterfüllung der Eintrittspupille des Mikroskopobjektivs (12) vorhanden ist, wobei damit optional die Abstände der Fokalebenen (FE) weiter aufspreizbar sind.

**14.** Vorrichtung nach einem der vorhergehenden Ansprüche 10 bis 13, **dadurch gekennzeichnet, dass** zusätzlich Mittel zur lateralen Abtastung und Verknüpfungsmittel zur Erzeugung eines Stapels von lateral zweidimensional abgetasteten Frames in verschiedenen Fokalebenen (FE) aus pixelweise aufgenommenen Fluoreszenzsignalen (34) vorhanden sind und dass in der Auswerte- und Steuereinheit (4) zur Zuordnung von Signalanteilen genau einer Fokalebene (FE) ein Kreuzkorrelator (42) zur Analyse von Fluoreszenzsignalen (34) aus jeweils vertikal benachbarten Fokalebenen (FE) und lateral benachbarten Pixeln der Frames vorgesehen ist.

**15.** Vorrichtung nach einem der vorhergehenden Ansprüche 10 bis 14, **dadurch gekennzeichnet, dass** zusätzlich Mittel zur lateralen Abtastung und Verknüpfungsmittel zur Erzeugung eines Stapels von lateral zweidimensional abgetasteten Frames in verschiedenen Fokalebenen (FE) aus pixelweise aufgenommenen Fluoreszenzsignalen (34) vorhanden sind und dass in der Auswerte- und Steuereinheit (4) zur Zuordnung von Signalanteilen zu genau einer Fokalebene (FE) eine Prozessoreinheit zur 3D-Entfaltung von Fluoreszenzsignalen (34) aus jeweils vertikal benachbarten Fokalebenen (FE) und lateral benachbarten Pixeln der Frames vorgesehen ist.

**Claims**

**1.** Method for evaluating signals of fluorescence scanning microscopy with simultaneous excitation and detection of the fluorescence in different focal planes (FE) of a sample (5) using confocal laser scanning microscopy, having the steps of:

- using a beam combiner (13) to couple at least one illumination beam (22) into a microscopic observation beam path (1) which is defined from a measurement volume (51) of the sample (5) up to an image plane (BE) and has, along an optical axis (11), a microscope objective (12), the beam combiner (13) for coupling in the illumination beam (22) and a detector array (3) arranged in the image plane (BE),
- focusing the illumination beam (22) with the microscope objective (12) into the measurement volume (51), wherein the illumination beam (22) undergoes beam-shaping in an illumination pupil for producing an elongate focus,
- collecting and collimating fluorescence light produced in the measurement volume (51) using the microscope objective (12) and passing resulting light beams onto a diffractive optical unit (15) that is arranged between the beam combiner (13) and the image plane (BE),
- splitting the light beams produced in the measurement volume (51) into beam bundles of different orders of diffraction (BO) using the diffractive optical unit (15) and imaging the different orders of diffraction (BO) onto separate detector regions (31) of the detector array (3) using a detection optical unit (8), wherein the diffractive optical unit (15) imprints onto the light beams of each order of diffraction (BO) a spherical phase that differs from the other orders of diffraction (BO), such that fluorescence light from focal planes (FE) of various depths of the measurement volume (51) is assigned to different orders of diffraction (BO) and deflected without confocal discrimination onto the separate detector regions (31), which convert fluorescence light from assigned focal planes (FE) of the measurement volume (51) and fluorescence crosstalk from unsharply imaged adjacent focal planes (FE) of the measurement volume (51) into electronic fluorescence signals (32),
- assigning the fluorescence signals (32), which originate from different focal planes (FE) of the measurement volume (51) and are superposed along the orders of diffraction (BO) due to crosstalk, to focal planes (FE) defined in the measurement volume (51) using correlation-based assignment of the fluorescence signals (32) based on distinguishable blinking behaviour of fluorescent dyes in the measurement volume (51) .

**2.** Method according to Claim 1, **characterized in that** the assignment of the fluorescence signals to the focal planes (FE) is effected by second-order cross-correlation of signal sequences of two detector regions (31) of adjacent orders of diffraction (BO).

3.  Method according to Claim 2, **characterized in that** the cross-correlation of the signal sequences is effected over a time duration that is adapted to the fluorescence blinking of the dyes, wherein dyes with a duration of an off-state of the fluorescence blinking of preferably between 0.1 $\mu$s and 500 $\mu$s, in particular between 5 $\mu$s and 50 $\mu$s, are used.

4.  Method according to Claim 3, **characterized in that** the correlation of signal sequences is effected over a number of frames that corresponds to 10 to 1000 times, preferably 20 to 50 times, an off-state of the fluorescence blinking.

5.  Method according to Claim 2, **characterized in that**, in addition to the cross-correlation, a 3D deconvolution is performed.

6.  Method according to Claim 1, **characterized in that** the measurement volume (51) is illuminated with an elongated focus to further spread a specified number of the focal planes (FE) in the depth of the measurement volume (51).

7.  Method according to Claim 6, **characterized in that** the spreading of the focal planes (FE) and an increased resolution in the depth of the measurement volume (51) can be set selectively by setting the elongated focus using a zoom objective (18) between the sample (5) and the diffractive optical unit (15).

8.  Method according to Claim 6, **characterized in that** the elongated focus is set by underfilling the entrance pupil of the microscope objective (12), wherein, in addition to the correlation of the fluorescence signals (34) in the depth, with an elongated focus, an additional correlation of fluorescence signals that are scanned in lateral planes of the sample with increased lateral resolution is optionally achieved.

9.  Method according to Claim 1 or 8, **characterized in that**, in addition to the correlation in the depth, an additional correlation for fluorescence signals scanned in lateral planes of the sample is effected.

10. Confocal fluorescence scanning microscope having an optical system, which defines a microscopic observation beam path (1) from a measurement volume up to an image plane (BE) and has a microscope objective (12), a beam combiner (13) for coupling to an illumination system (2), a detector array (3) and a stop (17) arranged in the image plane (BE) upstream of the detector array (3), and an illumination beam path which contains the illumination system (2) with a laser (21) and means (23) for producing an illumination beam path (22) with an elongated focus, **characterized in that**

    - the optical system comprises in the observation beam path (1) between the beam combiner (13) and the image plane (BE) a diffractive optical unit (15) for splitting light beams into beam bundles along different orders of diffraction (BO), wherein the beam bundles of each order of diffraction (BO) are imprinted with a spherical phase that differs from the other orders of diffraction (BO), and a detection optical unit (16) for focusing the split beam bundles onto separate detector regions (31) of the detector array (3),
    - the detector array (3) has a number of separately readable detector regions (31) that corresponds to the number of orders of diffraction (BO), with the result that fluorescence light coming in each case from a defined focal plane (FE) in the assigned order of diffraction (BO) and also fluorescence light from adjacent focal planes (FE) crosstalking into the same order of diffraction (BO) is recordable in the detector regions (31), and
    - an evaluation and control unit (4) for assigning the fluorescence signals (34) that originate from the same focal planes (FE) but are received by different detector regions (31), which is arranged downstream of the outputs of the detector regions (31) and contains means for the correlation (41) of different signal components and assignment of correlating signal components to in each case exactly one focal plane (FE) on the basis of distinguishable blinking behaviour of fluorescent dyes in the measurement volume (51).

11. Apparatus according to Claim 10, **characterized in that** the light beams of each order of diffraction (BO) are imprinted by the diffractive optical unit (15), which is preferably a chirped grating, with a spherical phase that differs from the other orders of diffraction (BO) by a respective integer multiple.

12. Apparatus according to Claim 10, **characterized in that** means for producing a Bessel beam or another non-diffractive beam are present as means for forming an elongated focus of the lasers (21) for the excitation of the sample (5).

13. Apparatus according to Claim 10 or 12, **characterized in that** a zoom optical unit (18) for underfilling the entrance pupil of the microscope objective (12) is present as means for forming an elongated focus, wherein the distances between the focal planes (FE) are thereby optionally further spreadable.

**14.** Apparatus according to one of the preceding Claims 10 to 13, **characterized in that** means for lateral scanning and linking means for producing a stack of laterally two-dimensionally scanned frames in different focal planes (FE) from fluorescence signals (34) which were recorded pixel by pixel are additionally present and **in that** a cross correlator (42) for analysing fluorescence signals (34) from in each case vertically adjacent focal planes (FE) and laterally adjacent pixels of the frames is present in the evaluation and control unit (4) for assigning signal components to exactly one focal plane (FE).

**15.** Apparatus according to one of the preceding Claims 10 to 14, **characterized in that** means for lateral scanning and linking means for producing a stack of laterally two-dimensionally scanned frames in diferrent focal places (FE) from fluorescence signals (34) that were recorded pixel by pixel are additionally present and **in that** a processor unit for 3D deconvolution of fluorescence signals (34) from in each case vertically adjacent focal planes (FE) and laterally adjacent pixels of the frames is present in the evaluation and control unit (4) for assigning signal components to exactly one focal plane (FE).

**Revendications**

**1.** Procédé d'évaluation de signaux de microscopie de fluorescence à balayage, avec excitation et détection simultanées de la fluorescence dans différents plans focaux (FE) d'un échantillon (5) par microscopie confocale laser à balayage, le procédé comportant les étapes qui consistent à :

- injecter au moins un faisceau d'éclairage (22) au moyen d'un combineur (13) de faisceaux dans un parcours (1) de faisceau d'observation au microscope qui est défini depuis un volume de mesure (51) de l'échantillon (5) jusqu'à un plan d'image (BE) et qui présente le long d'un axe optique (11) un objectif (12) de microscope, le combineur (13) de faisceaux qui injecte le faisceau d'éclairage (22) et une batterie (3) de détecteurs disposée dans le plan d'image (BE),
- focaliser le faisceau d'éclairage (22) à l'aide de l'objectif (12) de microscope dans le volume de mesure (51), le faisceau d'éclairage (22) subissant dans une pupille d'éclairage une mise en forme lui conférant un foyer allongé,
- rassembler et collimater au moyen de l'objectif (12) de microscope la lumière fluorescente générée dans le volume de mesure (51) et transmettre les faisceaux lumineux résultants sur une optique diffractive (15) disposée entre le combineur (13) de faisceaux et le plan d'image (BE),
- diviser les faisceaux lumineux générés dans le volume de mesure (51) en groupes de faisceaux de différents ordres de diffraction (BO) au moyen de l'optique diffractive (15) et formation de l'image des différents ordres de diffraction (BO) sur des parties séparées (31) de la batterie (3) de détecteurs au moyen d'une optique de détection (8), l'optique diffractive (15) conférant aux faisceaux lumineux de chaque ordre de diffraction (BO) une phase sphérique différente de celle des autres ordres de diffraction (BO), de telle sorte que la lumière fluorescente de plans focaux (FE) du volume de mesure (51) situés à différentes profondeurs soit associée à différents ordres de diffraction (BO) et soit dirigée sans discrimination confocale sur les parties (31) de détecteur séparées par lesquelles la lumière fluorescente provenant de plans focaux (FE) associés du volume de mesure (51) ainsi qu'une intermodulation de fluorescence provenant de plans focaux (FE) voisins représentés de manière diffuse du volume de mesure (51) sont converties en signaux électroniques (32) de fluorescence,
- associer les signaux (32) de fluorescence qui proviennent de différents plans focaux (FE) du volume de mesure (51) et qui sont superposés par l'intermodulation le long des ordres de diffraction (BO) à des plans focaux (FE) définis dans le volume de mesure (51) au moyen d'une association corrélative des signaux (32) de fluorescence sur la base des différences détectables du scintillement de colorants fluorescents dans le volume de mesure (51).

**2.** Procédé selon la revendication 1, **caractérisé en ce que** l'association des signaux de fluorescence aux plans focaux (FE) s'effectue par corrélation croisée du deuxième ordre de séquences de signaux de deux parties (31) de détecteur d'ordres de diffraction (BO) voisins.

**3.** Procédé selon la revendication 2, **caractérisé en ce que** la corrélation croisée des séquences de signaux est réalisée pendant une durée adaptée au scintillement de fluorescence des colorants et **en ce que** les colorants utilisés ont une durée de l'état éteint du scintillement de la fluorescence comprise de préférence entre 0,1 $\mu$s et 500 $\mu$s et en particulier entre 5 $\mu$s et 50 $\mu$s.

**4.** Procédé selon la revendication 3, **caractérisé en ce que** la corrélation entre les séquences de signaux est réalisée sur un nombre de trames qui correspond à entre 10 et 1000 fois et de préférence entre 20 et 50 fois l'état éteint du scintillement de la fluorescence.

5. Procédé selon la revendication 2, **caractérisé en ce qu'**un déploiement 3D est réalisé en plus de la corrélation croisée.

6. Procédé selon la revendication 1, **caractérisé en ce que** le volume de mesure (51) est éclairé avec un foyer allongé pour écarter davantage un nombre prédéterminé de plans focaux (FE) suivant la profondeur du volume de mesure (51).

7. Procédé selon la revendication 6, **caractérisé en ce que** l'écartement des plans focaux (FE) et une résolution accrue selon la profondeur du volume de mesure (51) peuvent facultativement être établis en réglant le foyer allongé entre l'échantillon (5) et l'optique diffractive (15) au moyen d'un objectif zoom (18) .

8. Procédé selon la revendication 6, **caractérisé en ce que** le foyer allongé est réglé en sous-remplissant la pupille d'entrée de l'objectif (12) de microscope et **en ce qu'**en complément à la corrélation des signaux de fluorescence (34) suivant la profondeur lorsque le foyer est allongé, une corrélation supplémentaire de signaux de fluorescence échantillonnés à une résolution latérale accrue dans des plans latéraux de l'échantillon est obtenue.

9. Procédé selon les revendications 1 ou 8, **caractérisé en ce qu'**en complément à la corrélation suivant la profondeur, une corrélation supplémentaire est réalisée sur les signaux de fluorescence échantillonnés dans des plans latéraux de l'échantillon.

10. Microscope confocal de fluorescence à balayage doté d'un système optique qui définit un parcours (1) de faisceau d'observation au microscope depuis un volume de mesure jusqu'à un plan d'image (BE) et présentant un objectif (12) de microscope, un combineur (13) de faisceaux qui permet le raccordement d'un système d'éclairage (2), une batterie (3) de détecteurs et un obturateur (17) disposé dans le plan d'image (BE) en amont de la batterie (3) de détecteurs, et doté d'un parcours de faisceau d'éclairage qui contient le système d'éclairage (2) ainsi qu'un laser (21) et des moyens (23) de formation d'un faisceau d'éclairage (22) à foyer allongé, **caractérisé en ce que**

- dans le parcours (1) de faisceau d'observation, le système optique comporte entre le combineur (13) de faisceaux et le plan d'image (BE) une optique diffractive (15) qui divise les faisceaux lumineux en groupes de faisceaux de différents ordres de diffraction (BO), une phase optique différente de celle des autres ordres de diffraction (BO) étant conférée aux groupes de faisceaux de chaque ordre de diffraction (BO) et une optique de détection (16) qui focalise sur des parties séparées (31) de la batterie (3) de détecteurs les groupes de faisceaux divisés,
- **en ce que** la batterie (3) de détecteurs présente un nombre de parties (31) lisibles séparément qui correspond au nombre des ordres de diffraction (BO), de telle sorte que chacune des parties (31) du détecteur peut enregistrer la lumière fluorescente provenant d'un plan focal (FE) défini de l'ordre de diffraction (BO) associé ainsi que la lumière fluorescente intermodulée qui provient de plans focaux (FE) voisins dans le même ordre de diffraction (BO) et
- **en ce qu'**une unité (4) d'évaluation et de commande est disposée en aval des sorties des parties (31) de 5détecteur pour associer les signaux de fluorescence (34) provenant de mêmes plan focaux (FE) mais reçus de différentes parties (31) de détecteur, cette unité contenant les moyens (41) de corrélation de différentes parties des signaux et d'association des parties corrélées des signaux à exactement un plan focal (FE), sur la base des différences détectables du scintillement de colorants fluorescents dans le volume de mesure (51).

11. Ensemble selon la revendication 10, **caractérisé en ce que** l'optique diffractive (15), qui est de préférence une grille comprimée, confère aux faisceaux lumineux de chaque ordre de diffraction (BO) une phase sphérique qui diffère des autres ordres de diffraction (BO) d'un multiple entier correspondant.

12. Ensemble selon la revendication 10, **caractérisé en ce que** comme moyens de formation d'un foyer allongé du laser (21) qui excite l'échantillon (5), il présente des moyens de formation d'un faisceau de Bessel ou d'un autre faisceau non diffractif.

13. Ensemble selon les revendications 10 ou 12, **caractérisé en ce que** comme moyens de formation d'un foyer allongé, il présente une optique zoom (18) qui sous-remplit la pupille d'entrée de l'objectif (12) de microscope, et qui permet facultativement d'agrandir davantage les distances entre les plans focaux (FE).

**14.** Ensemble selon l'une des revendications 10 à 13 qui précèdent, **caractérisé en ce que** des moyens d'échantillonnage latéral et des moyens d'association servant à former un empilement de trames échantillonnées latéralement en deux dimensions dans différents plans focaux (FE) à partir de signaux de fluorescence (34) enregistrés pixel par pixel sont en outre prévus et **en ce que** pour l'association de parties de signaux à exactement un plan focal (FE), un corrélateur croisé (42) qui analyse des signaux de fluorescence (34) provenant de chaque plan focal (FE) voisin dans la direction verticale et des pixels voisins dans la direction latérale des trames est prévu dans l'unité (4) d'évaluation et de commande.

**15.** Ensemble selon l'une des revendications 10 à 14 qui précèdent, **caractérisé en ce que** des moyens d'échantillonnage latéral et des moyens d'association servant à former un empilement de trames échantillonnées latéralement en deux dimensions dans différents plans focaux (FE) à partir de signaux de fluorescence (34) enregistrés pixel par pixel sont en outre prévus et **en ce que** pour l'association de parties de signaux à exactement un plan focal (FE), une unité de processeur qui déploie en 3D les signaux de fluorescence (34) provenant de chaque plan focal (FE) voisin dans la direction verticale et des pixels voisins dans la direction latérale des trames est prévue dans l'unité (4) d'évaluation et de commande.

$XC_2(z_0, z_2, \tau)$

$XC_2(z_1, z_3, \tau)$

$XC_2(z_2, z_4, \tau)$

$\cdots S_c(FE_3) \quad S_c(FE_2) \quad S_c(FE_1)$

## Fig. 1

$AC_2(z_3, \tau_1, \tau_2)$

$AC_2(z_2, \tau_1, \tau_2)$

$AC_2(z_1, \tau_1, \tau_2)$

**Fig. 2**

Fig. 3a

Fig. 3b

$XC_2(z_0, z_2, \tau)$

$XC_2(z_2, z_3, \tau)$

$XC_2(z_1, z_3, \tau)$

$XC_2(z_1, z_2, \tau)$

$XC_2(z_2, z_4, \tau)$

EP 3 295 236 B1

Fig. 3c

EP 3 295 236 B1

**Fig. 4**

EP 3 295 236 B1

**Fig. 5a**

Fig. 5b

$XC_1(z_1,z_2,\tau)$
$XC_2(z_2,z_3,\tau)$
$XC_3(z_3,z_4,\tau)$
$XC_4(z_4,z_5,\tau)$
$XC_5(z_5,z_6,\tau)$

$S_C(FE_4)$
$S_C(FE_3)$
$S_C(FE_2)$
$S_C(FE_1)$

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19702753 A1
- US 5239178 A
- US 6028306 A
- DE 10356416 A1
- WO 2010141608 A1
- DE 102014002328

**In der Beschreibung aufgeführte Nicht-Patentliteratur**

- **BLANCHARD et al.** Simultaneous multiplane imaging with a distorted diffraction grating. *Appl. Opt.,* 1999, vol. 38 (32), 6692-6699
- **DALGARNO et al.** Multiplane imaging and three-dimensional nanoscale particle tracking in biological microscopy. *Optics express,* 2010, vol. 18 (2), 877-884
- **ABRAHAMSSON et al.** Fast multicolor 3D imaging using aberration-corrected multifocus microscopy. *Nature Methods,* 2013, vol. 10 (1), 60-63
- **T.DERTINGER ; R.COLYER ; G.LYER ; S.WEISS ; J.ENDERLEIN.** Fast, background-free, 3D superresolution optical fluctuation imaging (SOFI). *PNAS,* 2009, vol. 106 (52), 22287-92
- **T.DERTINGER ; R.COLYER ; R.VOGEL ; J.ENDERLEIN ; S.WEISS.** Achieving increased resolution and more pixels with Superresolution Optical Fluctuation Imaging (SOFI). *Optics express,* 2010, vol. 18 (18), 18875-84
- **S. GEISSBUEHLER ; C. DELLAGIACOMA ; T. LASSER.** Comparison between SOFI and STORM. *Biomed. Opt. Express,* 2011, vol. 2 (3), 408-420
- **J. WIDENGREN.** Fluorescence-based transient state monitoring for biomolecular spectroscopy and imaging. *J. R. Soc. Interface,* 2010, vol. 7 (49), 1135-1144
- **DERTINGER et al.** *PNAS,* 2009
- **GEISSBÜHLER.** *Opt. Express,* 2011
- **DALGARNO et al.** *Optics express,* 2010, vol. 18 2, 881
- **BIMAN DAS ; NICOLAS LYGA.** Cumulant-like cross-correlation functions to determine temporal behavior of two signals. *Bulgarian Journal of Physics,* 2001, vol. 28 (3/4), 120-127
- **S. GEISSBUEHLER et al.** Comparison between SOFI and STORM. *Biomed. Opt. Express,* 2011, vol. 2, 408-420
- **DERTINGER et al.** Superresolution optical fluctuation imaging with organic dyes. *Angewandte Chemie,* 2010, vol. 122 (49), 9631-9633
- **ZHENG, QINSI et al.** On the mechanisms of cyanine fluorophore photostabilization. *The Journal of Physical Chemistry Letters,* 2012, vol. 3 (16), 2200-2203
- **DOWSKI ; CATHEY.** Extended depth of field through wave-front coding. *Applied Optics,* vol. 34 (11), 1859
- **Y. LIN.** Experimental investigation of Bessel beam characteristics. *Applied Optics,* vol. 31, 2708
- *Applied Optics,* vol. 34 (11), 1859